# EUROPÄISCHE PATENTANMELDUNG

(11) **EP 4 610 121 A2**
(43) Veröffentlichungstag der Anmeldung: **03.09.2025**
(21) Anmeldenummer: 25177766.0
(22) Anmeldetag: 10.07.2019
(51) Int. Cl.: B60T 8/40

(54) **HYDRAULIKSYSTEM MIT MINDESTENS ZWEI HYDRAULISCHEN KREISEN UND ZWEI DRUCKVERSORGUNGSEINRICHTUNGEN**

(30) Priorität: 12.02.2019 DE 202019101596 U
(62) Teilanmeldung aus: 19742146.4
(71) Anmelder: IPGATE AG, 8808 Pfäffikon SZ (CH)
(72) Erfinder: Leiber, Thomas, 22203 Rogoznica (HR); Leiber, Heinz, 71739 Oberriexingen (DE); Van Zanten, Anton, 71254 Ditzingen (DE)
(74) Vertreter: Felber, Josef

(57) **Zusammenfassung**

Die Vorrichtung dient zur Bremskrafterzeugung in einem Fahrzeug. Das Bremssystem weist zumindest zwei hydraulisch wirkende Radbremsen (RB1, RB2, RB3, RB4) auf. Der Druck in mindestens einer Radbremse (RB1, RB2, RB3, RB4) ist sowohl aufbaubar als auch abbaubar mittels einer ersten Druckversorgungseinrichtung (DV1) und/oder mittels zumindest eines Auslassventils (ZAV, AV1, AV2), das die jeweilige Radbremse (RB1, RB2, RB3, RB4) mit einem Vorratsbehälter (VB) verbindet. Eine zweite Druckversorgungseinrichtung (DV2) ist eine von einem elektromotorischen Antrieb angetriebene Pumpe mit kontinuierlicher Volumenförderung. Das Bremssystem ferner umfasst **entweder** ein Elektro-Pedal (P) mit einer Sensor-ECU und eine Steuerung über eine zentrale ECU (M-ECU), wobei ein Fahrerwunsch von der Sensor-ECU an zumindest eines der ersten und zweiten Druckversorgungseinrichtung (DV1, DV2) übertragen wird. **Oder** das Bremssystem umfasst einen Hauptbremszylinder (HZ), der mittels einer Betätigungseinheit (BE) in Form eines Pedals betätigbar ist und der nur einen Kolben aufweist, wobei ein Druckraum des Hauptbremszylinders (HZ) mit einem Wegsimulator (WS) verbunden ist und wobei der Druckraum über eine hydraulische Leitung mit zumindest einem des ersten und zweiten hydraulischen Bremskreises (BK1, BK2) verbindbar ist, wobei zumindest ein steuerbares Ventil einer Ventilvorrichtung zum Schließen der hydraulischen Leitung in der hydraulischen Leitung angeordnet ist. **Oder** das Bremssystem wird bei einer Bremsfunktion zum automatisierten Fahren, wie etwa eine Notbremsfunktion (AEB), ABS und/oder ESP, allein über eine zentrale ECU (M-ECU) und ohne Erfassung eines Fahrerwunsches am Elektro-Bremspedal oder einem Hauptzylinder gesteuert.

## Beschreibung

Die vorliegende Erfindung betrifft ein Hydrauliksystem und deren Regelverfahren mit mindestens zwei Druckversorgungen für redundante Funktionen.

### Stand der Technik

Die Automobilindustrie befindet sich in einem disruptiven Veränderungsprozess. Neben der zunehmenden Marktdurchdringung von Elektrofahrzeugen werden verschiedene Stufen des automatisierten Fahrens (AD= Automated Drive) durchlaufen, dies sind zunächst: Stufe 3 - Hoch Automatisiertes Fahren - HAD, Stufe 4 - Voll Automatisiertes Fahren - FAD und Stufe 5 - Autonomes Fahren - AD, wobei bei jeder Stufe die Anforderungen an die verwendeten Bremssysteme steigen.

Hierdurch wurde die Entwicklung von neuen Bremssystemen vorangetrieben. Die Ablösung von Vakuumbremskraftverstärkern durch elektrische Bremskraftverstärker (e-BKV) begann 2005 mit dem integrierten Bremssystems IBS1 [ATZ Ausgabe 6/11, DE112009005541B3] mit der Markteinführung von sog. 2-Box-Lösungen mit elektrischen Folgebremskraftverstärkern und zusätzlicher ESP-Einheit im Jahr 2013 [ATZ-Ausgabe 4/18], zeitnah gefolgt durch erste integrierte 1-Box Systeme mit Pedalsimulator im Jahr 2017 [Bremsenhandbuch - Kapitel 20]. Aktuell werden Lösungen für die Stufe 3 (HAD) entwickelt. Zukünftige Veränderungen werden durch in dem ATZ Artikel 3/19 "Bremskraftverstärker für das automatisierte Fahren" beschrieben.

Ab Stufe 3 (HAD) ist eine redundante Druckversorgung erstmalig zwingend erforderlich. Zudem ist eine Verbindung der Bremskreise mit den Vorratsbehälter bei offenen Bremssystemen weitestgehend zu vermeiden und Pedalgefühlsimulatoren mit konstanter Pedalcharakteristik setzen sich als Standard durch. Weiter muss auch eine Redundanz der ABS-Funktion bereitgestellt werden. Dies wird bei sog. 2-Box-Systemen mit elektrischem Bremskraftverstärker und ESP/ABS-Aggregat gemäß Stand der Technik derart realisiert, dass der elektrische Bremskraftverstärker (e-BKV) eine Druckmodulations-Funktion bei Ausfall des ESP-Aggregates übernimmt, um stets eine hohe Fahrzeugverzögerung zu gewährleisten. Hier wird im ersten Schritt eine sog. "ABS select-low bzw. achsindividuelle Druckregelung für die elektronische Bremskraftverteilung (EBV)" eingeführt. Die wird bespielweise wie in DE112009005541B3 dargestellt durch Vor- und Rückbewegung des Kolbens einer Kolben-Zylinder-Einheit realisiert

Ab Stufe 4 (FAD) werden für ausreichende Systemverfügbarkeit 3-fach Redundanzen erwartet, z.B. bei den Pedalsensoren mit der Regel "2 aus 3". Zudem ist ein Pedalsimulator wegen zunehmender Rekuperationsleistung von Elektrofahrzeugen und fehlender Akzeptanz der Veränderung der Pedalcharakteristik zwingend, weil vollautomatisches Fahren (FAD) über eine längere Zeitdauer betrieben werden kann und der Fahrer bei Übergang auf pilotiertes Fahren nicht auf eine Veränderung der Pedalcharakteristik vorbereitet ist. Zur Überwachung der Druckversorgung ist ein redundanter Druckgeber vorzusehen bzw. eine alternative Diagnosemöglichkeit vorzusehen. Weiter wird eine redundante ABS-Funktion mit zumindest achsindividueller, insbesondere radindiviudeller Radregelung gefordert und es werden Teilredundanzen eingeführt. Bremssysteme mit geschlossenen Bremskreisen im ABS-Betrieb haben Sicherheitsvorteile gegenüber Hydrauliksystemen, bei welchen im Regelbetrieb Druck über geöffnete Auslassventile in einen Vorratsbehälter abgelassen werden.

Die Anforderungen, insbesondere Sicherheitsanforderungen beim halbautomatisiertem (HAD) und vollautomatisiertem (FAD) Fahren haben wie einleitend ausgeführt großen Einfluss auf die Systemgestaltung. Diese bedingen redundante und teilredundante Systeme, Funktionen und Komponenten.

Im Vordergrund steht hier die redundante Druckversorgung, bei der die Bremskraft oder der Druckaufbau auch ohne Fahrerfuß gewährleistet sein muss. Entsprechend muss auch die elektronische Steuerung für diese Funktion ausgebildet sein. Für AD Level 3, insbesondere AD Level 4, muss ebenfalls die ABS-Funktion auch im Fehlerfalle gewährleistet sein. Redundanz in der ABS-Funktion in je nach AD-Automatisierungsstufe entweder eine "achsindividueller Regelung" oder "radindividueller Regelung".

Bei einer redundanten Druckversorgung kann auch ein Systemkonzept ohne Tandem-HZ, nur mit sog. E-Pedal oder für AD Level 5 nur mit einem Zentralrechner, der ein Sollsignal vorgibt ausgeführt werden. Hierbei sind folgende Patenanmeldungen erwähnenswert: DE 102017222450 offenbart ein Hydrauliksystem mit nur einem Hauptzylinder, redundanter Druckversorgung, Trennventilen zum Hauptzylinder und einen Wegsimulator. Ein Bypassventil zwischen den beiden Bremskreisen ermöglicht bei Ausfall einer Druckversorgung der zweiten Druckversorgung beide Bremskreise zu versorgen. Regelbetrieb mit stromlos offenen Ventilen ist extrem sicherheitsrelevant, da bei Ausfall des Ventils und z. B. Bremskreisausfall, ein Totalausfall der Bremse die Folge sein kann..

DE 10 2017 222 435 und DE 10 2016 225 537 zeigen ein Konzept mit 2 Druckversorgungen und E-Pedal, redundanter Druckversorgung und Bypassventil. Alle Systeme verwenden für die ABS-Funktion beim Druckabbau ein Auslassventile, über die Druck in den Vorratsbehälter abgelassen wird. Gerät beim Öffnen des Ventils ein Schmutzpartikel in dessen Ventilsitz, so kann dies einen Bremskreisausfall bei der nächsten Bremsung bewirken.

DE 10 2017 207 954 zeigt ein Systemkonzept mit redundanter Druckversorgung und ohne Auslassventile für die ABS-Druckregelung. Hier wird das sogenannte Multiplex-Druckregelverfahren, welches in DE 102005055751 und DE 10 2009 008944 eingeführt wurde, eingesetzt, bei dem die Drucksteuerung für ABS von der Druckversorgung durch Volumenmessung und Druckinformation erfolgt. Hierbei werden auch die Schaltventile zur Drucksteuerung verwendet. Ein Sicherheitsrisiko entsteht, wenn die Kolbendichtung oder ein Rückschlagventil zum Vorratsbehälter ausfällt und das Schaltventil durch Schmutzpartikel undicht ist, was ebenso einen Totalausfall der Bremse zur Folge hat.

WO2019002475A1 offenbart eine weitere Variante mit zwei Druckversorgungen, die beide als elektrisch angetriebenen Kolben-Zylindereinheiten ausgeführt sind, sowie einer Betätigungseinhalt mit Pedalgefühlsimulator oder einen Zentral-ECU ohne Betätigungseinheit für AD Level 4 oder AD Level 5. Dabei ist die Betätigungseinheit an der Spitzwand montiert und von der Druckversorgungseinrichtung getrennt. Die Funktionsredundanz im ABS-Betrieb wird dadurch erreicht, dass bei Ausfall einer Druckversorgungseinrichtung die zweite Druckversorgungseinrichtung den ABS-Regelbetrieb an allen Radbremsen über ein Verbindungsmodul übernimmt . Das 2. Modul kann und somit die Funktionsredundanzanforderungen für AD Level 4 und AD Level 5 erfüllen. Für den Regelbetrieb wird bevorzugt ebenfalls das Multiplex-Verfahren nach DE 102005055751 oder DE 10 2009 008944 eingesetzt mit der primären Absicht, die Bremskreise nicht oder nur selten zu öffnen und somit die Fehlersicherheit Im Vergleich zu DE 10 2017 222 435 , wo der Druckabbau vornehmlich mit Auslassventilen erfolgt, zu erhöhen. In ATZ 3/19 ist ausgeführt, dass der Betrieb im offenen Bremskreis sicherheitskritisch ist. Bei sog. offenen Bremssystemen wird bei ABS-Eingriff durch Öffnen eines Auslassventils der Radkreise mit dem Vorratsbehälter hydraulisch verbunden. Dadurch sind unerkannte Undichtigkeiten bei Ventilen z.B. durch Schmutzpartikel im Ventilsitz und Dichtungen (schlafende Fehler) besonders relevant. Verbindet ein Magnetventil mit schlafendem Fehler beispielsweise die beiden Bremskreise, kann bei Bremskreisausfall die DV und im schlimmsten Fall auch die gesamte Bremse ausfallen.

Oben genannte Beispiele zeigen das Problem der schlafenden Fehler, die bei Doppelfehlern kritisch werden, wenn diese nicht vor dem Bremsmanöver von der Diagnose erfasst werden können.

### Aufgabe der Erfindung

Die Erfindung stellt sich die Aufgabe, ein kompaktes, kostengünstiges und im höchsten Grade fehlersicheres Hydrauliksystem mit mehreren Bremskreisen und zwei kostenoptimierten Druckversorgungen bereitzustellen.

### Lösung der Aufgabe

Diese Aufgabe wird mit einem Bremssystem mit den Merkmalen des Anspruchs 1 erfindungsgemäß gelöst. Weitere vorteilhafte Ausgestaltungen des Hydrauliksystems gemäß Anspruch 1 ergeben sich durch die Merkmale der Unteransprüche.

### Vorteile der Erfindung

Die erfindungsgemäße Lösung beschreibt Systemaufbau und Verfahren für die Druckregelung eines redundanten Hydrauliksystems in vier Ausführungsformen ein Bremssystem. Die Ausführungsformen haben alle zwei Druckversorgungen sowie zwei hydraulische Kreise und unterscheiden sich in der Bauform und der Art der Fahrerwunscherfassung. Die Bauform ist entweder ein integriertes System oder ein aufgelöstes System mit separater Betätigungseinheit für die Fahrerwunscherfassung. Der Fahrerwunsch wird durch eine hydraulische Betätigungseinheit mit Pedalgefühlsimulator oder ein reines E-Pedal ohne Hydraulikflüssigkeit erfasst. In einer Ausführungsform (vgl. DE102017222435A1 sowie DE102017222450A1) wird als erste Druckversorgung (DV1) eine elektrisch angetriebene Kolben-Zylinder-Einheit und als zweite Druckversorgung (DV2) eine kontinuierlich fördernde Rotationspumpe (Kolbenpumpe oder Zahnradpumpe) eingesetzt. In einer alternativen Ausführungsform wird anstatt der Kolben-Zylinder-Einheit eine elektrisch angetriebene Zahnradpumpe als 1. Druckversorgungseinrichtung eingesetzt. Bei den Ausführungsformen (Kolben-Zylinder-Einheit oder Zahnradpumpe) wird Druck über die Zahnradpumpe/Kolben-Zylinder-Einheit aufgebaut und abgebaut. Über die Druckversorgungen (DV1 und DV2) kann simultan oder teilsimultan Druck aufgebaut werden. Dies kann für Downsizing der Druckversorgung, Erhöhung der Druckaufbaudynamik oder Redundanzen genutzt werden.

Im Gegensatz zum Stand der Technik kommt die erfindungsgemäße Bremsanlage ferner mit wenigen Magnetventilen, Druckgebern und sehr kleinbauenden und kostengünstigen Druckversorgungen aus, zudem werden beide Druckversorgungen in eine kleine Baueinheit integriert. Zugleich werden die hohen Anforderungen von AD Level 3 und 4 an die Ausfallsicherheit und die Redundanz der Funktionen erfüllt. So ist z.B. auch bei Bremskreisausfall eine sehr hohe Verfügbarkeit im verbleibenden Bremskreis und bei Ausfall einer Druckversorgung kann die ABS-Funktionsanforderung mit achsindividueller, bremskreisindividueller Druckregelung bzw. radindividueller Regelung für AD Level 3 bis 4 erfüllt werden.

Zusätzlich ist die Architektur derart konzipiert, dass das Hydrauliksystem alle Fahrzeugklassen (Kleinwagen bis SUV) abdeckt, da das Fördervolumen der 2. Druckversorgung DV2 nicht begrenzt ist. DV1 kann bei höheren Volumenbedarf zudem z.B. durch Rückbewegung des Kolbens nachfördern. Wird DV1 als Zahnradpumpe ausgeführt, kann kontinuierlich Volumen gefördert werden.

Die erfindungsgemäße Lösung ist gegenüber dem Stand der Technik sehr kostengünstig, kompakt und hat gleichzeitig eine sehr hohe Verfügbarkeit bei Ausfall von Komponenten und Leckagen. Dies wird primär gemäß des Hauptanspruches dadurch erreicht, dass die erste und die zweite Druckversorgungseinrichtung (DV1, DV2) in beiden Bremskreise (BK1, BK2) unabhängig voneinander und/oder simultan/teilsimultan Druck aufbauen können. Die führt gleichzeitig zu hoher Verfügbarkeit, da mittels jeder Druckversorgereinrichtungen unabhängig von der Funktionsfähigkeit der anderen Druckversorgereinrichtung ein Regelbetrieb (ABS, ESP) mit mindestens achsindividueller oder bremskreisindividueller Regelung durchgeführt werden kann.

Die sehr kostengünstige und kompakte Bauweise wird dadurch realisiert, in dem die erste Druckversorgung DV1 vorzugsweise auf einen ersten Druck (p1) und begrenztes Volumen im Vorhub ausgelegt ist. Die Druckversorgung DV1 erzeugt Druck bis zum Radblockierdruck, in der Regel 80-120 bar, während die zweite Druckversorgung DV2 bis zum maximalen Druck (p2) im Bremssystem ausgelegt ist, welcher bei Einflussfaktoren wie z.B. Fading durch überhitzte Bremsen bei PKW in der Regel auf 180-200 bar steigen kann. Bei Elektofahrzeugen kann der Fadingeffekt durch Bremen über Elektromotor reduziert werden, d.h. es ist ein geringer Maximaldruck erforderlich. Dieser Effekt kann jedoch nur dann genutzt werden, wenn das Fahrzeuggewicht nicht steigt durch Batterie des Elektroantriebes. Da die Druckversorgung DV2 kontinuierlich fördert, ist das Volumen der Kolben-Zylindereinheit der DV1 im Sinne der Kosten- und Bauraumoptimierung vorzugsweise begrenzt und deckt nicht oder nur teilweise den Volumenbedarf der Bremsanlage ab, der unter der Wirkung von Einflussfaktoren wie Luftblasen, Schrägverschleiß, Knockback und Reibwertschwankungen erforderlich ist. Steigt der Volumenbedarf, kann entweder durch die zweite Druckversorgung DV2 das Volumen bereitgestellt werden oder es wird über die DV1 durch Rückbewegung des Kolbens und vorherigem Trennen der Druckversorgung DV1 vom Bremskreis nachgefördert aus dem Vorratsbehälter. Dadurch kann die Kolben-Zylinder-Einheit sehr kurz ausgeführt werden und der Antriebsmotor der Kolben-Zylinder-Einheit kann auf einen geringes Motordrehmoment ausgelegt werden, was zu einer Kosten- und Gewichtsreduzierung der Druckversorgung führt. Zudem wird bei einer Ausführungsform der ersten Kolben-Zylinder-Einheit mit Spindeltrieb die Belastung des Spindeltriebes reduziert, was zu weiteren Kosteneinsparungen in der Druckversorgungseinrichtung und zu weniger Verschleiß in den Dichtungen führt. Im Normalbetrieb, d.h. ohne signifikante Veränderung durch die o.g. Einflussfaktoren wird primär die Druckversorgung DV1 zur Bremskraftverstärkung, Druckregelung im Rekuperationsbetrieb und im Regelbetrieb (ABS, ESC-Funktion) eingesetzt. Die Druckversorgung DV2 wird dahingegen vorzugsweise nur bei Notbremsfunktionen (AEB) zum extrem schnellen Druckaufbau, bei Betrieb bei hohen Drücken und bei Ausfall der ersten Druckversorgung DV1 eingesetzt. Die Präferenz des Einsatzes der DV1 für den Normalbetrieb ist darin begründet, dass der Betrieb geräuschärmer und genauer erfolgt, da eine Pumpe in der Ausführung als Radialkolbenpumpe Prinzip bedingt Druckamplituden aufweist und somit lauter und über Regelventile weniger genau zu regeln ist als eine Kolben-Zylinder-Einheit oder eine Zahnradpumpe. Wird als zweite Druckversorgung eine Zahnradpumpe eingesetzt, besteht die Geräuscheinschränkung nicht.

Der Druckaufbau der DV1 erfolgt durch Vorbewegung des Kolbens der Kolben-Zylinder-Einheit., der Druckabbau über Rückbewegung des Kolbens der DV1 oder über ein oder mehrere Auslassventile. Primär wird der Druckaufbau und Druckabbau bei aktivem System in Normalbetrieb (Bremskraftverstärkung, Rekuperation, Torque Vektoring) über die DV1 ausschließlich durch Vor- und Rückbewegung des Kolbens geregelt, was im Folgenden auch als PPC-Druckregelung genannt und verstanden wird. PPC-Druckregelung kann dabei mit und ohne Druckgebersignal eingesetzt werden. Bei Einsatz eines Druckgebers, wird die Regelung vorzugsweise durch die Sensorsignale des Antriebsmotors der DV1 (Motorstrom, Winkelposition des Motors) und die Druck-Volumen-Kennlinie der Bremskreise in der Präzision gesteigert, insbesondere bei der präzisen Druckverlaufsregelung beim Blending-Betrieb, z.B. bei Rekuperation von Bremsenergie über Elektromotoren an einer oder mehreren Achsen und der sich daraus ergebenden unterschiedlichen Drücken und Druckverläufen an den Achsen des Fahrzeugs. Fällt der Druckgeber aus oder steht in dem Bremskreis zur Regelung nicht verfügbar, kann auch ohne Druckgeber durch den stromproportionalen Zusammenhang zwischen Phasenstrom (Motordrehmoment M_{Motor} = Drehmomentkonstante kt * Phasenstrom i_{Phase} und Motormoment die Kolbenkraft berechnet und somit näherungsweise der Druck geregelt werden. Temperatureinflüsse werden vorzugsweise durch einen Temperatursensor abgebildet, der den Einfluss der Temperatur auf die Drehmomentkonstante kt_{Temp} = kt * (1-f_{Temp} * □K) mit kt_{Temp}: kt bei abweichender Temperatur von Raumtemperatur 20°C, f_{Temp}: Korrekturfaktor Temperatur in %, □K: Temperaturänderung in Kelvin) korrigiert und somit auch bei unterschiedlichen Temperaturen eine sehr genaue Motordrehmomentberechnung zulässt.

Der Druckaufbau der DV2 erfolgt über eine elektrisch angetriebene Kolbenpumpe, bevorzugt über eine langjährig in KFZ-Bremsanlagen erprobte Radial-Kolbenpumpe oder einer Zahnradpumpe. Zur Druckbegrenzung und Druckabbau ist bei einer Kolbenpumpe ein Magnetventil erforderlich. Im Vergleich zum Stand der Technik (DE102017222435A1) wird in der erfindungsgemäßen Lösung kein separates Ventil an der Pumpe genutzt, sondern es wird ein Auslassventil des Hydrauliksystems zur Druckregelung genutzt. Der Druckabbau eines durch die DV2 aufgebauten Druckes erfolgt über Auslassventil(e) oder über die PPC-Druckregelung der DV1. Ein komfortabler und geräuscharmer Druckabbau über das zentrale Auslassventil ZAV ohne PPC-Druckregelung der DV1 ist möglich, durch PWM-Ansteuerung der Schaltventile SV der Radzylinder und/oder PWM-Ansteuerung der Ventile BP1 und BP2. Als Alternative zur Radial-Kolbenpumpe wird erfindungsgemäß als Pumpe eine Zahnradpumpe eingesetzt. Dies ermöglicht, dass der Druckabbau auch über die Pumpe erfolgen kann. Hierzu ist erforderlich, dass der Antriebsmotor der Pumpe zumindest drehzahlgeregelt betrieben werden kann und die Drehzahlrichtung umkehrbar ist.

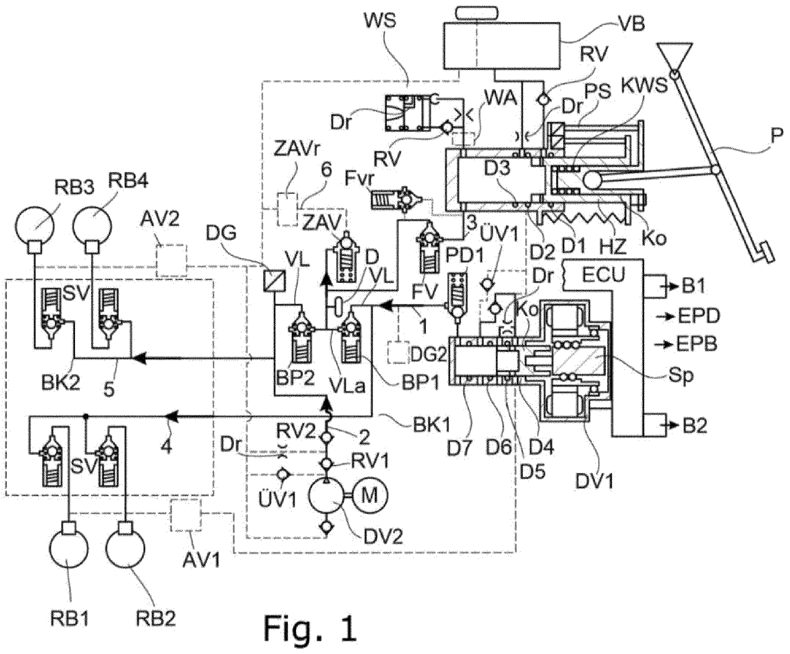

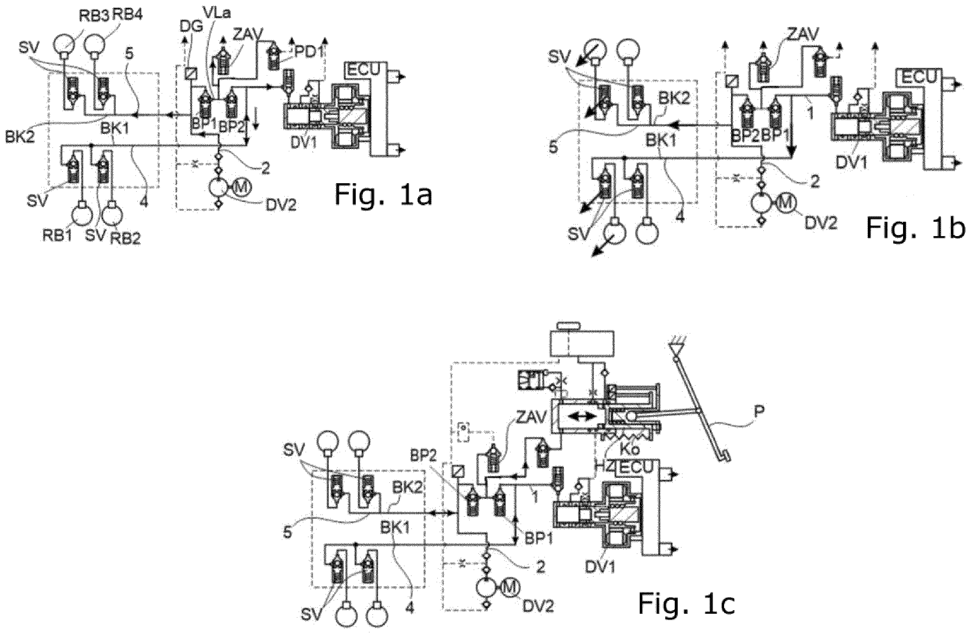

Im Regel- und Rekuperationsbetrieb wird die rad- oder bremskreisindividuelle Multiplexregelung, die sogenannte MUX-Druckregelung, eingesetzt, wobei das Multiplexverfahren nur mit Schaltventilen oder alternativ ergänzend mit mindestens einem Auslassventil (an Radbremse, Zentralventil zwischen Bremskreisen) durchgeführt wird. Dies ermöglicht den gleichzeitigen Druckabbau in mehreren Radbremsen bzw. einem Bremskreis, während in den anderen Radbremsen/2. Bremskreis Druck aufgebaut wird. Durch die Kombination der MUX-Regelung der Regelung des Druckabbaus über Auslassventile und MUX-Regelung können Magnetventile eingespart werden, was zu einer weiteren Kostenreduzierung in der erfindungsgemäßen Vorrichtung führt. So ist bei kostenoptimaler Ausgestaltung nur ein zentrales Auslassventil ZAV erforderlich. Zur weiteren Erhöhung der Sicherheit kann ein in Reihe geschaltetes zweites Auslassventil ZAVr (der Figur 1) eingesetzt werden. Das ZAV-Ventil verbindet die Radbremsen mit dem Vorratsbehälter. Dies Verbindung ist wie eingangs ausgeführt, sicherheitskritisch in Hinblick auf schlafende Fehler. Alternativ oder ergänzend können Auslassventile (AV1, AV2) an der Radbremse zum Druckabbau in den Vorratsbehälter eingesetzt werden. Diese Auslassventile sind vorzugsweise in jedem Bremskreis oder an den Radbremsen der Vorderachse vorgesehen. Bei Schwarz-Weiss-Bremskreis-Verteilung sind die Auslassventile AV1, AV2 an den Vorderradbremszylindern eines Bremskreises, bei diagonalen Bremskreisen an den Vorderradbremszylindern in zwei Bremskreisen, wobei die Auslassventile mit dem Vorratsbehälter verbunden sind und über Schaltventile vom Bremskreis trennbar sind. Die Positionierung der Auslassventile an der Vorderachse ist darin begründet, dass das Volumen der Vorderradbremsen höher ist und somit Auslassventile vorteilhaft zur Entlastung der Druckabbaudynamik dort am sinnvollsten eingesetzt werden können.

Des weiteren kann der Druckaufbau und Druckabbau im PPC oder MUX-Betrieb durch PWM-Steuerung der Magnetventile zwischen Radbremse und Druckversorgung weiter in der Regelung verfeinert werden (PPC+PWM, MUX+PWM), so daß bei PPC-Druckregelung simultan bei unterschiedlichen Radbremsen unterschiedliche Druckverläufe realisiert werden können

Neben der Möglichkeit, den Druck über Auslassventile abzubauen, kann auch im simultanen Druckabbauverfahren durch Rückbewegung des Kolbens der DV1 der Druck von zwei Radbremsen gleichzeitig abgebaut werden, wobei ein Schaltventil komplett geöffnet ist und das zweite Schaltventil PWM getaktet bzw. über ein stromgeregelten Betrieb ein Ventilöffnungsquerschnitt einstellbar ist. Damit ist auch bei unterschiedlichen Druckniveaus in den Radbremsen ein simultaner oder teilsimultaner Druckabbau durch Kolbensteuerung der Druckversorgung und/oder Multiplexbetrieb möglich und es können unterschiedliche Druckgradienten gleichzeitig geregelt werden. PWM-Verfahren kann ebenfalls beim Druckaufbau im PPC oder MUX-Verfahren eingesetzt werden. Damit kann der Bremskreis ganz oder weitestgehend geschlossen betrieben werden, was wie im ATZ 3/19-Artikel ausgeführt, die Fehlersicherheit signifikant erhöht.

Durch die Kombination der verschiedenen Druckregelverfahren im erfindungsgemäßen Hydrauliksystem kann der Druckregelzyklus von 4 Radbremsen im Vergleich zum reinen MUX-Verfahren signifikant verkürzt werden, was sich sehr vorteilhaft auf die Dynamik der Raddruckregelung auswirkt und keinen speziellen Elektromotor mit geringer Trägheitsmasse für die Druckversorgung DV1für den MUX-Betrieb erfordrt und nicht Schaltventile zu den Radbremsen mit sehr geringen Strömungswiderstand erfordert, gleichzeitig kann im Hydrauliksystem die Anzahl an Magnetventilen signifikant reduziert werden. Während in der DE102017222450 zwei Druckgeber und 16 Magnetventile benötigt werden, kann das erfindungsgemäße System mit vergleichbarer oder sogar höherer Verfügbarkeit und Fehlersicherheit in einer einfachsten Ausführungsform nur 8-9 Magnetventile und 1 Druckgeber betrieben werden.

In der einfachsten Ausführungsform weist das Bremssystem zwei Druckversorgungen und nur 8 Magnetventile (E-Pedal) bzw. 9 Magnetventile (Hydraulischer Simulator) auf, die auf bis zu 12 Magnetventile erweitert werden können, wenn nicht alle Freiheitsgrade in der Druckregelung genutzt werden. Zusätzlich wird vorzugsweise nur ein Druckgeber eingesetzt, der in einem Bremskreis BK2 positioniert, welcher für den Druckaufbau durch die Pumpe genutzt wird. Alternativ ist ein weiterer Druckgeber im Bremskreis BK1 vorgesehen. Magnetventile an den Radbremsen sind vorzugsweise als stromlos-offene Schaltventile SV ausgeführt mit geringen Strömungswiderständen, die vorzugsweise zusätzlich im PWM-Betrieb betrieben werden können. Stromlos-offene Magnetventile (BP1, BP2, Schaltventile an Radbremen) werden vorzugsweise PWM gesteuert, zudem weisen die Ventil unterschiedliche Strömungswiderstände auf (ZAV, ZAVᵣ SV, BP1 mit großen Öffnungsquerschnitt, Auslassventile AV1, AV2 an Radbremsen mit geringem Öffnungsquerschnitt.

Schaltventile sind über den Ventilsitz in hydraulischer Verbindung mit der Radbremse und werden über den Druck in der Radbremse automatisch geöffnet. Die selbstständige Öffnung ist ein wichtiges Sicherheitsfeature insbesondere bei der Realisierung des Multiplexbetriebes für Radbremsen, wo an der Radbremse kein Auslassventil vorgesehen sind, damit auch im Fehlerfall von Ventilen der Druck in der Radbremse abgebaut werden kann. Die Druckversorgung wird an den Ankerteil angeschlossen. Mit einem derartigen Anschluss ist der Differenzdruck am Ventil beim Druckaufbau relativ gering, es muss jedoch bei der Federauslegung des Magnetventils RF berücksichtigt werden, dass die Druckdifferenz nicht dazu führt, dass beim Druckaufbau das Ventil zugedrückt wird, wenn das Volumen von der Druckversorgung DV in die Radbremse gefördert wird. Ein derartig vorteilafter Anschluss ermöglicht Ventile mit großem Öffnungsquerschnitt ÖQ bzw. geringen Strömungsverlusten, ideal für das PPC- und MUX-Druckregelverfahren.

Zusätzlich werden die Verbindungsventile BP1 und BP2 derart angeschlossen, dass Sie über den Druck im Bremskreis selbstöffnend sind und zudem im PWM-Betrieb betrieben werden können. Damit ist eine Druckregelung der Pumpe sowie ein Druckabbau über das Zentralventil ZAV möglich.

Folgende Druckregelverfahren werden bei der erfindungsgemäßen Vorrichtung in einzelnen eingesetzt und führen zu einer sehr hohen Genauigkeit und Verfügbarkeit auch bei Ausfall von Komponenten (Druckversorgung, Sensoren, Bremskreisausfall) und somit zu einer sehr robusten und fehlersicheren Lösung
(1) Druckaufbau in Normalbetrieb ohne signifikante Einflussfaktoren:
   a) Druckaufbau im PPC-Verfahren bis zum Druck p1, max. Radblockierdruck +/- 20% (i.d.R. 80-120 bar) über Kolben-Steuerung der DV1 in Vorwärtsbewegung des Kolbens (Vorwärtsbewegung = Komprimierung des Fluidvolumens in Richtung hydraulischer Verbraucher an der Radbremse) mit Nutzung mindestens eines Druckgebers
   b) Druckaufbau im PPC-Verfahren bis zum Druck p1, max. Radblockierdruck +/- 20% (i.d.R. 80-120 bar) in Vorwärtsbewegung des Kolbens der DV1 mit Nutzung der Signale von Motorstrom, Kolbenweg und Druck-Volumen-Kennlinie ohne Nutzung des Druckgebers
   c) Druckaufbau im MUX-Verfahren bis zum Zieldrücken an d.h. Einstellung eines ersten Raddruckes an mindestens einer Radbremse, Schließen der Schaltventile, gefolgt durch Erhöhung des Druckes an weiteren Radbremsen.
   d) Druckaufbau bis zu unterschiedlichen Zieldrücken über Kolbensteuerung mit eines der Verfahren (1)a - (1c) und Nutzung PWM-Taktung der stromlos offenen Magnetventile zur Regelung von unterschiedlichen Druckverläufen oder Kompensierung unterschiedlicher Strömungswiderstände in den Radbremsen
   e) Kombination von Druckregelverfahren (1c) und 1(d)
   f) Druckaufbau bis zu einem ersten Druck nahe der Radblockiergrenze mit Druckversorgung DV1, weitere Druckerhöhung durch Druckversorgung DV2 bis zum Maximaldruck bei Schließen des Zuleitungsventils der DV1 zu den Bremskreisen
(2) Druckabbau im Normalbetrieb ohne signifikante Einflussfaktoren:
   a) Druckabbau im PPC-Verfahren bis zum Zieldruck über Kolben-Steuerung der DV1 in Rückwärtsbewegung des Kolbens (Rückwärtsbewegung = Dekomprimierung des Fluidvolumens hydraulischer Verbraucher an der Radbremse) mit Nutzung mindestens eines Druckgebers
   b) Druckabbau im PPC-Verfahren bis zum Zieldruck durch Rückwärtsbewegung des Kolbens der DV1 mit Nutzung der Signale von Motorstrom, Kolbenweg und Druck-Volumen-Kennlinie
   c) Druckabbau im MUX-Verfahren bis zum Zieldrücken an Rädern, d.h. Einstellung eines ersten Raddruckes an mindestens einer Radbremse, Schließen der Schaltventile, Erhöhung des Druckes an weiteren Radbremsen
   d) Druckabbau über mindestens ein Auslassventil, wobei über eine Stromregelung im Auslassventil ein bestimmter diskreter weitestgehend konstanter Öffnungsquerschnitt des Magnetventils eingestellt wird, der die Druckänderung bestimmt
   e) Druckabbau bis zu unterschiedlichen Zieldrücken über Kolbensteuerung mit einem der Verfahren (1)a bis (1c) und Nutzung PWM-Ansteuerung von stromlos offener Magnetventile zur Realisierung von unterschiedlichen Druckverläufen und Kompensierung unterschiedlicher Strömungswiderstände in den Radbremsen
   f) Druckabbau in Radbremsen oder Bremskreisen über Auslassventile an den Radbremsen oder Druckabbau in einen oder beiden Bremskreisen über ein zentrales Auslassventil ZAV, insbesondere bei hohen Drücken, die oberhalb der Druckgrenze der Druckversorgung DV1 liegen
   g) Kombination mindestens einer der Druckregelverfahren (1a) bis 1(f)
(3) Druckaufbau im Notbremsbetrieb (AEB-Funktion) mit extremen schnellem Regelbetrieb
   a) Druckaufbau im PPC-Verfahren bis zum Druck p1, max. Blockierdruck (i.d.R. 80-120 bar) über Kolben-Steuerung der DV1 in Vorwärtsbewegung des Kolbens mit maximaler Motorleistung
   b) Verfahren im PPC-Verfahren nach 3(a) mit Kompensation des unterschiedlichen Druckänderung in den Radbremsen durch unterschiedliche Strömungswiderstände zwischen Druckversorgung DV1 und Radbremsen durch PWM-Steuerung von stromlos offenen Magnetventilen zwischen Druckversorgung und Radbremse
   c) Verfahren nach 3(a) mit Kompensation des unterschiedlichen Druckänderung in den Radbremsen durch unterschiedliche Strömungswiderstände zwischen Druckversorgung DV1 und Radbremsen durch teilweise Druckabbau über mindestens ein Auslassventil (AV1, AV2, ZAV)
   d) Verfahren nach 3(a) mit Ergänzung durch MUX-Verfahren zur Kompensation des unterschiedlichen Druckänderung in den Radbremsen durch unterschiedliche Strömungswiderstände zwischen Druckversorgung DV1 und Radbremsen
   e) Verfahren nach 3(a) mit Kompensation des unterschiedlichen Druckänderung in den Radbremsen durch unterschiedliche Strömungswiderstände zwischen Druckversorgung DV1 und Radbremsen durch teilweisen Einsatz der Druckversorgung DV2 zum Druckaufbau in einem Bremskreis
   f) Simultaner oder teilsimultaner Druckaufbau mit DV1 in einem ersten Bremskreis BK1 und Druckaufbau mit DV 2 im zweiten Bremskreis BK2
   g) Druckaufbau mit DV2 und DV1 im MUX-Verfahren simultan oder teilsimultan in beiden Bremskreisen
(4) Gleichzeitiger Druckaufbau und Druckabbau in Normalbetrieb
   a) Druckaufbau bis zum Zieldruck in Vorwärtsbewegung des Kolbens der DV1 in einem Bremskreis, Druckabbau im zweiten Bremskreis über Auslassventile an den Radbremsen (AV1, AV2) oder zentrales Auslassventil (ZAV)
   b) Druckaufbau bis zum Zieldruck in Vorwärtsbewegung des Kolbens der DV1 in beiden Bremskreisen, Druckabbau in einer Radbremse über ein oder mehrere Magnetventil(e) an den Radbremsen bei geschlossenen Schaltventil derjenigen Radbremse, wobei der Druckabbau über Auslassventile erfolgt
   c) Druckaufbau bis zum Zieldruck in Vorwärtsbewegung des Kolbens der DV1 in mehreren Radbremsen im Multiplexbetrieb mit gleichzeitigen Druckabbau über Auslassventile AV1, AV2 an den Radbremsen bei geschlossenen Schaltventil
   d) Druckaufbau bis zum Zieldruck in Vorwärtsbewegung des Kolbens der DV1 in mehreren Radbremsen im Multiplexbetrieb mit gleichzeitigen Druckabbau über Auslassventile AV1, AV2 an den Radbremsen bei geschlossenen Schaltventil
   e) Druckaufbau bis zum Zieldruck in Vorwärtsbewegung des Kolbens der DV1 in mehreren Radbremsen im Multiplexbetrieb mit gleichzeitigen Druckabbau in einem Bremskreis ein zentrales Auslassventil ZAV.
(5) Druckaufbau und Druckabbau im Fehlerfall DV1
   a) Druckaufbau mit DV2 über den gesamten Druckbereich, Druckabbau über in einen oder mehreren Bremskreis(en) über ZAV,
   b) Druckaufbau mit DV2 über den gesamten Druckbereich, Druckabbau in einem oder mehreren Radbremsen eines Bremskreises über AV an der Radbremse
   c) Druckaufbau mit Druckverlaufsregelung mit DV bei gleichzeitiger Öffnung eines oder mehrere Auslassventile (AV1, AV2, ZAV)
   d) Druckregelverfahren nach (5a) bis (5c) und Einsatz PWM-Steuerung bei stromlos offenen Magnetventilen zur Steuerung der Strömungswiderstände im Druckaufbau und Druckabbau
   e) Druckregelverfahren nach (5a) oder (5c) und Einsatz des Drucksensors bei der Druckabbauregelung über Auslassventile
(6) Druckaufbau und Druckabbau im Fehlerfall DV2
   (a) Betrieb des Motors der DV1 mit 1x3 Phasen bei 50% des max. Motormomentes, ermöglicht in der Regel noch eine Verzögerung von 0,4 - 0,6 g
   (b) Nachfördern von Volumen von DV1 aus dem Vorratsbehälter bei Einflussfaktoren wie z.B. Luftblasen, etc.
(7) Ausfall Druckgeber, Nichtverfügbarkeit Druckgeber in einem Bremskreis
   (a) Bremsdruckeinstellung durch Auswertung Motorstrom und Regelung nach einer Verstärkerkennlinie und stromproportionalen Zusammenhang zwischen Motorphasenstrom und Motordrehmoment (Drehmomentkonstante) und insbesondere mechanischen Wirkungsgrad der Getriebeübersetzung
   (b) Bremsdruckeinstellung durch Auswertung Druck-Volumenkennlinie, Kolbenweg direkt oder indirekt über Motorwinkelgeber
   (c) Auswertung Temperatur zur Kompensation/Korrektur der Drehmomentkonstante
   (d) Kombination von Verfahren (7a) bis (7c)

Die oben beschriebenen Druckregelverfahren kommen bei folgenden Funktionen der Bremsanlage wie folgt zum Einsatz:

### (a) Bremsdruckregelung (Normalfunktion, AEB-Funktion)

Bei der Bremskraftverstärkung wird der Druck der Kolben-Zylindereinheit der Druckversorgung DV1 durch PPC-Drucksteuerung durch Vor- und Rückbewegung des Kolbens gesteuert. Wird eine sehr hohe Druckaufbaudynamik gefordert (z.B. Notbremssituation AEB) wird die DV2 vorteilhaft zur Unterstützung der DV1 zum Druckaufbau in einem Bremskreis zugeschaltet. Damit kann die Leistungsanforderung an den Motor der DV1 reduziert werden. Der Druckabbau erfolgt dann über Rückbewegung des Kolbens und/oder über Auslassventile, die vorzugsweise aus Geräuschgründen erst bei kleinen Druckniveaus eingesetzt werden und das zusätzliche der Pumpe DV2 in das System geförderte Volumen wird wieder in den Vorratsbehälter abgeben.

### (b) Drucksteuerung bei Rekuperation von Bremsenergie insbesondere über einen Elektromotor (Rekuperationsbetrieb/Blending)

Auch das Blending (Rekuperation von Bremsenergie über die elektrischen Antriebsmotoren des Fahrzeuges bzw. Elektromotoren in Hybridsystemen, die zur Erzeugung von Bremsmoment genutzt werden können) wird über die Kolben-Zylindereinheit DV1 vorzugsweise abgebildet. In dem in Radbremsen, wo ein Elektromotor Bremsenergie erzeugt wird, ein niedriger Druck eingestellt wird. Hier wird das MUX-Verfahren aus DE 102005055751 oder DE 102009008944 eingesetzt, d.h. der Druckaufbau und Abbau wird über den Kolbendruck in der Druckversorgung DV1 durch Vor- und Rückbewegung durch geöffnete Schaltventile gesteuert, wobei Drücke in den Radbremsen durch geschlossene Schaltventilen gehalten werden. Alternativ kann auch Druckauf- und Druckabbau mit PPC-Verfahren erfolgen, wobei die Radbremsen, die aufgrund der Rekuperation einen niedrigen Druck benötigten beim Druckaufbau im PWM-Betrieb betrieben, analog kann das PWM-Verfahren für die Druckverlaufsteuerung beim Druckabbau eingesetzt werden. Diese Verfahren können für Elektromotoren an mindestens eine Achse eingesetzt werden. Die unterschiedlichen Bremsdruckregelung erfolgt bei Schwarz-Weiss Bremskreisen achsindividuell über Mulitplexen oder PPC-Verfahren mit PWM-Steuerung, bei diagonalen Bremskreisen wird das Mulitplexen eingesetzt.

### (c) Drucksteuerung bei Torque Vektoring, Lenkungseingriffen

Torque Vektoring bzw. Lenkungseingriffe spielen eine zunehmende Rolle bei modernen Fahrzeugen, um die Agilität zu verbessern insbesondere in der Kurvenfahrt oder als Backup-Lenkungsfunktion. Das Bremssystem kann für den Lenkungseingriff an der Vorderachse oder Hinterachse eingesetzt werden. An der Vorderachse wird kann eine Redundanz zur elektrischen Servolenkung erzeugt werden und auf eine redundante Ausführung der elektrischen Servolenkung verzichtet werden. An der Hinterachse kann auf eine Hinterachslenkung verzichtet werden und die Agilität einen Fahrzeuges in der Kurvenfahrt erhöht werden

Sind in modernen E-Fahrzeugen Elektromotoren an jedem Rad einer Achse vorgesehen, spielt die Interaktion mit der Bremse eine große Bedeutung in der Regelung des Radmomentes. So kann sowohl durch den Elektromotor am Rad, als auch die Bremse ein Eingriff erfolgen und einer genauen Druckregelung kommt sowohl bei der Beschleunigung, Kurvenfahrt als auch Verzögerung ein hohe Bedeutung zu..

Torque-Vektoring bzw. Lenkungseingriffe erfolgen primär über die Druckversorgungseinrichtung DV1. Hier wird der Vordruck durch die Kolbenzylindereinheit gesteuert und die Drücke an den Radbremsen an einer Achse werden entweder über das Multiplexverfahren nacheinander geregelt oder an verschiedenen Rädern werden über das PPC-Verfahren mit PWM-Steuerung an einer Radbremse unterschiedliche Druckverläufe geregelt. Durch die redundante Ausführung mit 2 Druckversorgungen kann zusätzlich simultan oder teilsimultan ein Eingriff an der Vorderachse und Hinterachse erfolgen, wenn die Bremskreise des Systems eine Schwarz-Weiss.Bremskreisaufteilung haben.

### (d) Regelbetrieb (ABS, ESP)

Im Regelbetrieb (ABS, ESP) wird ebenfalls das MUX-Verfahren eingesetzt, wobei in Extremsituationen mit sehr hohen Druckgradienten (z.B. Bremsung auf hohem Reibwert - high □) der Druckabbau auch über Auslassventile bzw. PWM-Steuerung der BP1 und BP2-Ventile erfolgt. Damit kann der Drehmomentbedarf des Antriebsmotors der DV1 reduziert werden bzw. es herrschen geringere Anforderungen an die Trägheitsmasse des Rotors des Antriebsmotors der DV1. Multiplexverfahren kann im simultanen und teilsimultanen Betrieb vorteilhaft durch PWM-Steuerung unterstützt werden, indem der Vordruck über die Druckversorgung DV1 eingestellt wird. Ferner kann der erweiterte Freiheitsgrad der simultanen Druckregelung mit 2 Druckversorgungen genutzt werden, in dem der Druck in einem Bremskreis bzw. bestimmten Rädern aufgebaut wird und im anderen Bremskreis bzw. anderen Radbremszylindern abgebaut wird.

### (e) Regelbetrieb bei Ausfall einer Druckversorgung

Fällt die DV1 aus, wird die Druckaufbauregelung über die DV2 durchgeführt. Der Druckabbau in der Ausführungsform der zweiten Druckversorgung als Kolbenpumpe erfolgt dann ausschließlich über Auslassventile oder das zentrale ZAV-Ventil. In der Ausführungsform der 2. DV als Zahnradpumpe, kann der Druckabbau über die Zahnradpumpe erfolgen. Für die Druckaufbauregelung einer Kolbenpumpe werden ebenfalls Auslassventile zur Regelung nutzt, z.B. durch teilweises Öffnen im PWM-Betrieb beim Druckaufbau über die DV2. Ist DV2 eine Zahnradpumpe erfolgt die Druckregelung über Strom und Winkelpositionsregelung des Motors der Zahnradpumpe. Leckagen in der Zahnradpumpe werden dabei berücksichtigt und nachgeregelt.

Fällt die DV2 aus, wird ausschließlich über die primäre Druckversorgung DV 1 geregelt nach den oben beschriebenen Druckregelverfahren. Hier gibt es keine Einschränkung in der Funktion. Auch das begrenzte Volumen der Kolben-Zylinder-Einheit ist keine Einschränkung. Hierzu kann aus dem Vorratsbehälter nachgefördert werden. Dies erfolgt in der Form, daß die Druckversorgung von dem Bremskreis getrennt wird durch Schließen des Verbindungsventils. Dann wird der Kolben zurückgefahren und über ein Rückschlagventil wird Volumen aus dem Vorratsbehälter gesaugt. Die Zeitunterbrechung liegt bei ca. 100 ms, was im oberen Druckbereich unkritisch ist, da das Fahrzeug bereits verzögert wird. Für den sehr unwahrscheinlichen Fading-Fall bei gleichzeitigem Ausfall der DV1 ist die Verzögerung durch das max. Drehmoment des Elektromotors begrenzt und muss entsprechend der gesetzlichen Randbedingungen und Ausfallwahrscheinlichkeiten ausgelegt werden. Für diesen äußerst seltenen Fall kann bei E-Fahrzeugen oder Hybridfahrzeugen ein elektrischer Antriebsmotor zur Verzögerung beitragen oder eine elektrische Parkbremse wird aktiviert.

Ist die DV2 ein Zahnradpumpe kann kontinuierlich gefördert werden und es muss nicht wie oben beschrieben nachgefördert werden. Die Druckregelung der Zahnradpumpe erfolgt über Strom und Winkelpositionsregelung des Antriebsmotors der Zahnradpumpe. Leckagen in der Zahnradpumpe werden dabei berücksichtigt und nachgeregelt. Leckagen können z.B. durch Auswertung von Drucksensoren in Bremskreisen bestimmt werden.

Neben der generellen Druckregelung und der Auslegung der zwei Druckversorgungen für unterschiedliche Betriebszustände kommt der hydraulischen Auslegung des Systems zur Erzielung einer sehr hohen Fehlersicherheit eine sehr hohe Bedeutung zu. Dies wird im Folgenden in mehreren Ausführungsformen ausgeführt:
Nachfolgend werden anhand von Zeichnungen verschiedene mögliche Ausführungsformen der Erfindung näher erläutert.

Es zeigen:
- Fig. 1: erste Ausführungsform eines erfindungsgemäßen Hydrauliksystems mit einer fehlersicheren Ventilanordnung zur Verbindung beider Bremskreise, einem Hauptzylinder mit Betätigungseinrichtung sowie zwei Druckversorgungseinrichtungen mit elektronischer Steuer- und Regeleinrichtung als sogenannte Integrierte 1-Box-Anlage;
- Fig. 1a:: Funktion des Bremssystems mit beiden Druckversorgungseinrichtungen;
- Fig. 1b:: Funktion bei Ausfall in einem Bremskreis und/oder des Schaltventils einer Radbremse;
- Fig. 1c:: Funktion des Hydrauliksystems bei Ausfall beider Druckversorgungseinrichtungen;
- Fig. 2:: zweite Ausführungsform des erfindungsgemäßen Hydrauliksystem mit Hauptzylinder als separates Modul;
- Fig.3a: Konstruktive Ausführung der ersten Ausführungsform
- Fig.3b:: Konstruktive Ausführung der zweiten Ausführungsform
- Fig. 4:: dritte Ausführungsform des erfindungsgemäßen Hydrauliksystems mit getrenntem E-Pedal
- Fig. 4a:: Konstruktive Ausführung der dritten Ausführungsform mit E-Pedal
- Fig. 5:: vierte Ausführungsform des erfindungsgemäßen Hydrauliksystems mit 2 Rotationspumpen
- Fig.5a:: Konstruktive Ausführung der vierten Ausführungsform
- Fig. 6a:: Druckaufbauregelung mit beiden Druckversorgungen bei Notbremsfunktion (AEB) im simultanen Betrieb
- Fig. 6b:: Druckaufbaureglung mit beiden Druckversorgungen bei Betrieb bis zu bei hohen Drücken
- Fig. 6c:: Druckaufbauregelung bei Torque Vektoring, Lenkungseingriffen an mindestens einer Achse
- Fig. 6d:: Druckaufbauregelung bei Rekuperationsbetrieb an 2 Achsen mit Druckversorgung DV1
- Fig. 6e:: Druckabbauregelung im Rekuperationsbetrieb an 2 Achsen mit Druckversorgung DV1
- Fig. 6f:: Variante zur Druckabbauregelung im Rekuperationsbetrieb an 2 Achsen mit Druckversorgung DV1
- Fig. 6g:: Druckregelung im Regelbetrieb (ABS) mit simultaner Multiplexsteuerung an 2 Radbremsen und Druckabbau über 2 Auslassventilen an weiteren Radbremsen (2-Kanal MUX-Betrieb mit PWM)
- Fig. 6h:: Druckregelung im Regelbetrieb ABS) mit simultaner Multiplexsteuerung an 2 Radbremsen und Druckabbau über 1 Auslassventilen einer Radbremsen (3-Kanal MUX-Betrieb mit PWM)
- Fig. 6i:: Druckregelung im Regelbetrieb ABS) mit simultaner Multiplexsteuerung an 2 Radbremsen und Druckabbau über 1 zentrales Auslassventil (2-Kanal MUX-Betrieb mit PWM, Druckabbau einer oder mehrerer Radbremsen, 1 Bremskreis über ZAV)

**Fig. 1** zeigt die Grundelemente eines regelbaren Bremssystems bestehend aus Hauptbremszylinder HZ mit Wegsimulator WS und Vorratsbehältnis VB, zwei Druckversorgungseinrichtungen DV1 und DV2, wobei die Druckversorgungseinrichtung DV1 eine elektromotorisch angetriebene Kolben-Zylinder-Einheit und die zweite Druckversorgungseinrichtung DV2 eine einfache 1-kreisige Kolben- oder Zahnradpumpe aufweist. Beide wirken zusammen mit einer Ventilschaltung auf die Radbremszylinder RZ, welche den geregelten Raddruck, z. B. bei ABS, auf die Bremse übertragen. Dies entspricht dem Stand der Technik. Das erfindungsgemäße Hydrauliksystem soll jedoch eine hohe Fehlersicherheit für halbautomatisches (HAD) oder vollautomatisches Fahren (FAD) aufweisen.

Hierzu sollten alle ausfallrelevanten Komponenten berücksichtigt werden, wie z. B. Ventile, Sensoren, Dichtungen, Motoren, Bremskreise. Vorteilhaft sollten daher folgende Komponenten bzw. Hydraulikverbindungen ausfallsicher ausgebildet sein:
(1) Verbindung von der für den ersten Bremskreis vorgesehenen Druckversorgungseinrichtung DV1 zum zweiten Bremskreis BK2;
(2) Verbindung von der für den ersten Bremskreis vorgesehenen Druckversorgungseinrichtung DV2 zum ersten Bremskreis BK 1;
(3) Verbindung von dem Druckraum des Hauptbremszylinders HZ über das Ventil FV hin zu den Bremskreisen BK 1, BK2 über die Ventile BP1 und BP2;
(4) Verbindung von Ventil PD1 und Ventil BP1 zu den Radbremszylindern RZ über die jeweiligen den Radbremsen zugeordneten Schaltventile SV;
(5) Verbindung von Ventil BD2 zu den Radbremszylindern RZ über die jeweiligen den Radbremsen zugeordneten Schaltventile SV;
(6) Verbindung von einem Bremskreis BK1, BK2 hin zum Vorratsbehältnis VB;
(7) Verbindungen zwischen Bremskreisen BK1, BK2 hin zu den Radbremszylindern RZ.

Diese hydraulischen Verbindungen mit möglichen Ausfallfehlern der einzelnen Komponenten werden im Folgenden beschrieben.

Die Druckversorgungseinrichtung DV1 wirkt vom Bremskreis BK1 in den Bremskreis BK2 über die Hydraulikleitungen Leitung 1, VL, VLa und 5 sowie über die Schaltventile SV zu den Radbremsen RB. Im Stand der Technik wird hierzu lediglich ein einziges Bypassventil eingesetzt. Ein Ventilausfall kann hier einen Totalausfall der Bremse bewirken, wenn noch ein schlafender Fehler bei einem weiteren Ventil hinzukommt. Die Erfindung sieht daher zwei redundante Ventile BP1 und BP2 in der Verbindungsleitung VL vor, um die Verbindung hin zum Bremskreis BK2 von der ersten Druckversorgungseinrichtung DV1 zu ermöglichen. Schlafende Fehler der Ventile BP1 und BP2 werden vom Druckgeber erkannt, indem bei Druckänderung die Ventile kurzgeschlossen werden. In dieser Phase muss der Druck konstant bleiben. Bei Ausfall der ersten Druckversorgungseinrichtung DV1, z.B. bei Ausfall einer Kolbendichtung, wird eine Rückwirkung auf Bremskreis BK2 über die drei redundanten Ventile BP1, BP2 und PD1 verhindert. Die Ventile sind vorzugsweise stromlos offene Ventile, damit bei Ausfall der Druckversorgungseinrichtungen DV1, DV2 der Hauptbremszylinder HZ auf beide Bremskreise BK1 und BK2 wirken kann. Wird Druck über das Öffnen der Ventile ZAV oder FV reduziert, so öffnen die beiden Verbindungsschaltventile ohne eigene elektrische Ansteuerung durch den wirkenden Differenzdruck selbstständig. Die beiden Verbindungsventile BP1 und BP2 sind dabei mittels der Verbindungsleitung VLa miteinander hydraulisch verbunden.

Entsprechend wirkt die Druckversorgungseinrichtung DV2 in dem zweiten Bremskreis BK2 über die Hydraulikleitungen 2 und 5 und über die Ventile BP2 und BP1 in die Hydraulikleitung 4 und von dort über die Schaltventile SV zu den Radzylindern RZ. Bei Ausfall des BK in Radbremsen RB sind durch Diagnose zuvor die Ventile SV, BP1 und BP2 geschlossen und verhindern einen Ausfall der Druckversorgung. Hierbei sind alle Ventile z. B. SV, BP1, BP2 sicherheitskritisch als schlafende Fehler zu betrachten, da das die Ventile durchströmende Hydraulikmedium Schmutzpartikel enthält, welche ein Schließen des Ventils verhindern können und die Ventile somit undicht sind. Im vorliegenden Fall kann z.B. bei Ausfall eines Schaltventils SV zwar der eine Bremskreis ausfallen. Der andere Bremskreis ist jedoch durch die Zwischenschaltung der beiden Ventile BP1 und BP2 abgesichert. Es müsste hier ein Dreifachfehler vorliegen, d.h. beide Ventile BP1 und BP2 müssten zusätzlich ausfallen, damit ein Totalausfall vorliegt. Zumindest ein Bremskreis ist somit sicher gegen Doppelfehler geschützt und verhindert einen Totalausfall der Bremse. Sicherheit gegen Doppelfehler, wenn schlafende Fehler auftreten können, ist ein entscheidendes Sicherheitsmerkmal für HAD und FAD. Auch Aufrechterhaltung der Druckversorgung oder des Bremskraftverstärkers bei Bremskreisausfall zählt dazu.

Die Druckversorgungseinrichtung DV2 kann dabei bei schnellen Druckaufbau oder Druckaufbau über 120 bar die andere Druckversorgungseinrichtung DV1 unterstützen und/oder die Druckversorgung bei Fading durch kontinuierliche Förderung und/oder für die ABS-Funktion vornehmen und/oder bei Ausfall der anderen Druckversorgung DV1 dessen Funktion mit übernehmen.

Ebenso ist es möglich, dass die Druckversorgungseinrichtung DV1 den Druckaufbau für Druckbereiche kleiner gleich 120 bar und für die ABS-Funktion übernimmt. Bei Ausfall der Druckversorgungseinrichtung DV2 steht, sofern die Druckversorgungseinrichtung DV2 nur auf einen maximalen Druck von 120 bar ausgelegt ist, nur dieser maximale Druck von 120 bar für beide Bremskreise zur Verfügung.

Bei geschlossenen Verbindungsventilen BP1 und/oder BP2 können die beiden Druckversorgungseinrichtungen DV1 und DV2 in ihren Bremskreisen BK1 und BK2 den Druck unabhängig voneinander einregeln bzw. -stellen.

Die Pedalbewegung wird über redundante Pedalwegsensoren (PS) gemessen, die zugleich auf ein KWS-Messelement nach WO2012/059175 A1 wirken. Mit dem Signal der Pedalwegsensoren wird die Druckversorgungseinrichtung DV1 angesteuert, wobei die Kolbensteuerung den Volumenfluss in der Hydraulikhauptleitung 1 in dem Bremskreis BK1 und über die redundanten BP1- und BP2-Ventile in den Bremskreis BK2 bewirkt. Die Druckversorgungseinrichtung DV1 kann so ausgelegt werden, dass sie nur bis zum Blockierdruck z. B. 120 bar wirkt. Höhere Drücke liefert dann die Druckversorgungseinrichtung DV2, welche Volumen in den Bremskreis BK2 und über die redundanten Ventile BP1 und BP2 in BK1 fördert. Dabei kann die Druckversorgungseinrichtung DV2 eine kontinuierlich fördernde Pumpe sein. Ist das Bremssystem schlecht entlüftet oder entsteht Dampfblasenentwicklung mit mehr Volumenbedarf, so wird dies über die bekannte Druck-volumenkennlinie (p-v-Kennlinie) erfasst, was zur Folge hat, dass schon bei kleineren Drücken die Druckversorgungseinrichtung DV2 einsetzt. Zur Pedalbetätigung ist noch zu ergänzen, dass diese den Kolben Ko bewegt, welcher über den pedalkraftproportionalen Druck auf den bekannten Wegsimulator WS wirkt und damit die Pedalcharakteristik bestimmt. Der Wegsimulator WS kann üblicherweise über ein Ventil abgeschaltet werden, insbesondere in der Rückfallebene bei ausgefallenen Druckversorgungseinrichtungen. Bei redundanter Druckversorgungseinrichtungen ist dies aufgrund der sehr geringen Ausfallwahrscheinlichkeit nicht mehr relevant.

Über die Leitung 3 kann der Hauptbremszylinder HZ mit den Bremskreisen BK1 oder BK2 verbunden sein, wobei in der Leitung 3 das Ventil FV zum Verschließen derselben angeordnet ist. Diese Verbindung ist nur in der Rückfallebene wirksam. Sofern die Leitung mit der Verbindungsleitung der beiden Schaltventile BP1 und BP2 verbunden ist, bilden die beiden Ventile BP1 und BP2 eine weitere Redundanz. Eine übliche Verbindung vom FV direkt in einen der beiden Bremskreise BK1, BK2 hätte bei undichtem Ventil FV zur Folge, dass der Bremskreis und damit die Druckversorgung auf den HZ-Kolben wirkt, was herkömmlich zum Abschalten der Druckversorgung führt.

Bei Ausfall eines Bremskreises im Radzylinder wird herkömmlich das entsprechende Einlassventil EV oder Schaltventil SV geschlossen, damit wird der ausgefallene Radkreis eliminiert. Ein undichtes EV/SV (schlafender Fehler) bewirkt den Ausfall des Bremskreises oder der gesamten Druckversorgung. Auch hier ist durch die Ventile BP2 und BP1 eine zusätzliche Sicherheit gegeben, so dass die Druckversorgung nicht ausfällt. Ein Ausfall des Bremskreises BK1 aufgrund eines nicht funktionierenden Schaltventils SV bedeutet einen Ausfall der Druckversorgung DV1, wodurch die Druckversorgung aller noch funktionstüchtigen Radbremsen über die andere Druckversorgungseinrichtung DV2 erfolgt.

Ein weiterer Ausfall kann durch einen Fehler des Rückschlagventils RV1 im zweiten Bremskreis entstehen. Der Ausfall der Druckversorgung DV2 kann hier durch ein redundantes RV2 verhindert werden. Eine Drossel Dr nach dem RV2 mit kleinem Druckfluss ermöglicht die Diagnose z. B. über Druckabfall.

Für die ABS-Regelung oder zur Druckreduzierung mit der zweiten Druckversorgungseinrichtung DV2 ist ein zentrales Auslassventil ZAV notwendig. Der Volumenfluss geht dabei zusätzlich über die Ventile BP1 oder BP2, so dass ein undichtes ZAV nicht kritisch für den Normalbetrieb ist, da bei Ausfall des zentralen Abführventils ZAV die Drucksteuerung über Druckversorgungseinrichtungen DV1 und DV2 erfolgt. Außerdem wird der Fehler, auch schlafend, von ZAV gleich durch Druckänderung oder erhöhte Volumenförderung der Druckversorgungseinrichtung DV1 erkannt. Bei normaler Bremsung bis ca. 120 bar wirkt die Druckversorgung DV über offene Ventile BP1 und BP2 in beide BK. Für extreme Sicherheitsanforderungen kann auch ein red. Abführventil ZAVr in der Leitung zum Vorratsbehälter VB eingebaut werden.

Eine Druckreduzierung ohne Betätigung der Druckversorgungseinrichtung DV1, ist durch Ansteuerung des zentralen Auslassventils ZAV möglich. Bei geöffneten Ventile BP1 und BP2 kann, bei geöffneten Ventilen SV, durch Öffnung des zentralen Auslassventils ZAV der Druck in den Radzylindern RB1, RB2, RB3 und RB4 reduziert werden. Dabei ist es vorteilhaft, die Förderleistung der Druckversorgungseinrichtung DV2 zu stoppen oder zu reduzieren. Die zeitliche Druckabbaugradienten in den Radzylindern RB1, RB2, RB2 und RB4 werden dabei unter anderem von der Geometrie des zentralen Auslassventils ZAV bestimmt. Eine Möglichkeit, diese Druckabbaugradienten zu beeinflussen, bietet die Pulsweitenmodulation, PWM, der elektrischen Spannung in der Ansteuerung der Ventile BP1 und BP2. Sollen die Druckabbaugradienten in den Radzylinder RB1 und RB2 kleiner sein als bei voll geöffnetem Ventil BP1, so wird, bei geöffnetem zentralen Auslassventil ZAV, das Ventil BP1 mit PWM so angesteuert, dass die Druckabbaugradienten denen der Sollwerte entsprechen oder nahekommen. Dabei kann mit dem Drucksensor DG2 die Regelgüte der Druckreduzierung verbessert werden. Alternativ können durch PWM Ansteuerung der Ventile SV in BK1, bei geöffneten Ventilen BP1 und ZAV, die Druckabbaugradienten in den Radzylindern RB1 und RB2 individuell eingestellt werden. Ähnliches gilt für die Druckabbaugradienten in den Radzylindern RB3 und RB4. Sollen die Druckabbaugradienten in den Radzylinder RB3 und RB4 kleiner sein als bei voll geöffnetem Ventil BP2, so wird, bei geöffnetem zentralen Auslassventil ZAV, das Ventil BP2 mit PWM der elektrischen Spannung so angesteuert, dass die Druckabbaugradienten, denen der Sollwerte entsprechen oder nahekommen. Dabei kann mit dem Drucksensor DG die Regelgüte der Druckreduzierung verbessert werden. Alternativ können durch PWM Ansteuerung der Ventile SV in BK2, bei geöffneten Ventilen BP2 und ZAV, die Druckabbaugradienten in den Radzylindern RB3 und RB4 individuell eingestellt werden. Damit sind sehr komfortable und geräuscharme Bremsungen des Fahrzeugs, auch ohne Betätigung der Druckversorgungseinrichtung DV1 realisierbar. Sind radindividuelle Druckabbaugradienten in den Radzylindern erforderlich, z.B. bei Torque Vectoring im Rekuperationsbetrieb, dann können diese, bei geöffnetem zentralen Auslassventil ZAV, im bekannten Multiplexverfahren mit der PWM-Ansteuerung der Ventile BP1 und BP2 und durch Schaltung der Ventile SV realisiert werden. Eine weitere Möglichkeit in der Realisierung dieser radindividuellen Druckabbaugradienten bietet die PWM der SV-Ansteuerung bei offenen Ventilen BP1, BP2 und ZAV. Damit können simultane Druckabbauten mit individuellen Druckabbaugradienten für jeden Radzylinder RB1, RB2, RB3 und RB4 durchgeführt werden. Alternativ zu den PWM-Ansteuerungen der Ventile können auch Stromregelungen für die Ventilansteuerungen eingesetzt werden.

Ausfallursachen im Hauptbremszylinder HZ und Wegsimulator WS sind normalerweise die Dichtungen. Beim Hauptbremszylinder HZ kann eine zusätzliche Dichtung D3 mit Drossel in der Rücklaufleitung zum Vorratsbehälter VB eingesetzt werden, um den Ausfall einer Dichtung frühzeitig diagnostizieren zu können. Damit ist eine Undichtheit über eine kleine zusätzliche Pedalbewegung über die Pedalhubsensoren erkennbar. Zu berücksichtigen ist die geringe Beanspruchung bei HAD und FAD.

Zur Diagnose der Dichtungen ist bei vielen Systemen in der Rücklaufleitung ein stromlos offenes Magnetventil eingeschaltet, welches zur Diagnose geschlossen wird. Hierbei wird von der Druckversorgungseinrichtung DV1 über die Ventile PD1, BP1 und EV Druck in den Hauptbremszylinder HZ geleitet. Die Diagnose erfolgt über Druckänderung bei konstanter Kolbenposition oder Änderung der Kolbenposition bei konstantem Druck. Als Alternative kann hier auch eine Kombination aus Drossel- und Rückschlagventil kostensparend eingesetzt werden. Die Drossel ist so bemessen, dass ein Leckfluss durch die Dichtung nur geringfügig zur Pedalverlagerung innerhalb einer normalen Bremszeit von ca. 10 sec. führt.

Dieselbe Lösung wird auch beim WS-Kolben mit redundanter Dichtung eingesetzt, Diagnose wie o. g. bei D3 über die Pedalbewegung. Hinzu kommt noch, dass eine Steuerung der Bremskraftverstärkung auch bei diesen ausgefallenen Dichtungen noch möglich ist, allerdings mit veränderter Pedalcharakteristik. Auch hier gilt eine extrem kleine Ausfallrate für den Ausfall von zwei Dichtungen fast im Bereich <10⁻¹⁰/Jahr. Auch die Druckversorgungseinrichtung DV1 kann mit redundanten Dichtungen, wie beim Hauptbremszylinder HZ zuvor beschrieben, ausgerüstet werden mit D6 mit Drossel zwischen D6 und D5. Wenn das Saugventil direkt mit dem Anschluss an PD1 verbunden wird, dann setzt das Ansaugen unmittelbar beim Rückhub des Kolbens ein, mit dem Vorteil, dass auch bei tiefen Temperaturen eine hohe Saugleistung gegeben ist. Ein Ausfall, Undichtheit des SV bewirkt im Grenzfall Ausfall der DV. Ein Kompromiss liegt in dem Anschluss des SV bei ca. 60 % des Hubes. Damit ist 40% des Hubes ohne Auswirkung eines undichten SV möglich und zugleich eine Saugwirkung im normalen Temperaturbereich. Mit kleiner o. g. Einschränkung ist durch Redundanz die Volumenförderung des Kolbens gesichert. Weiterhin kann der Motor über eine redundante 2x3-Phasen-Wicklung angesteuert werden, so dass die DV nur durch blockierendes KGT ausfallen.

Die ABS-Funktion über Multiplexbetrieb MUX und der Druckversorgungseinrichtung DV1 erfolgt wie in WO 2006/111393 A1 beschrieben. Erweiterte MUX-Funktionen ergeben sich durch ein zentrales Abführventil ZAV. Ist beim Druckaufbau p_{auf} im Bremskreis BK1 gleichzeitig ein Druckabbau p_{ab} im anderen Bremskreis BK2 notwendig, so erfolgt dieser über das Abführventil zentrale ZAV und gleichzeitig geschlossenem Ventil BP1. Dadurch ist das Multiplexsystem MUX nur durch zwei Radbremsen RB1, RB2 im Bremskreis BK1 belastet, d. h. es kann nicht zugleich ein Druckaufbau Pauf und Druckabbau Pab in den Radbremsen RB1 und RB2 des Bremskreises BK1 erfolgen. Alternativ kann auch ein Abführventil AV1, AV2 im jeweiligen Bremskreis zum Druckabbau p_{ab} zur Entlastung des MUX verwendet werden. Dabei kann das Abführventil AV1, AV2 entweder zwischen dem Schaltventil SV und einem Verbindungsschaltventil BP1, BP2 oder aber zwischen der Radbremse und dem zugehörigen Schaltventil SV angeordnet bzw. angeschlossen werden, so dass ein direkter Druckabbau Pab über das Abführventil hin zu einem Vorratsbehälter VB erfolgen kann. Dies ist insbesondere zum Druckabbau Pab in den Vorderrädern sinnvoll. Das zentrale Abführventil ZAV wird bei dieser Alternative nicht benötigt.

Die ABS-Funktion mittels der zweiten Druckversorgungseinrichtung DV2 erfolgt in diesem Fall leicht eingeschränkt, insbesondere kein Pauf bei Pab. Eine voll individuelle ABS-Regelung ist trotzdem möglich. Zu berücksichtigen ist der seltene Einsatz der Druckversorgungseinrichtung DV2 bei Drücke größer 120 bar und bei Ausfall der ersten Druckversorgungseinrichtung DV1.

Typisch ist für den o. g. MUX-Betrieb die Druckregelung auch bei ABS über die Volumenmessung und über die Kolbenbewegung der Druckversorgungseinrichtung DV1, auch unter Berücksichtigung der Druck-Volumen-Kennlinie (p-V-Kennlinie). Bei einer einfachen Exzenterkolbenpumpe kann dies nicht über die Kolbenbewegung, jedoch über die Förderzeit = Volumen bei zusätzlicher Drehzahlmessung und ggfs. Druckmessung erfolgen. Somit ist auch eine Volumenzumessung für den Druckaufbau möglich. Vorteilhaft ist hier beim Druckaufbau p_{auf} ein serieller und nicht gleichzeitiger Druckaufbau p_{auf} in den einzelnen Radbremsen. Zu berücksichtigen ist dabei die Ventildimensionierung und der Staudruck am Ventil, insbesondere bei den Ventilen BP1 und BP2 bei schnellem Druckaufbau in den Radkreisen. Der Staudruck von o. g. Ventilen wirkt als Druckdifferenz zwischen den Bremskreisen BK1 und BK2. Dieser kann erheblich reduziert werden, wenn in diesem Betriebszustand beide Druckversorgungseinrichtungen DV1 und DV2 eingeschaltet werden. Hier bietet sich auch eine einkreisige Zahnradpumpe anstelle einer Kolbenpumpe an. Hierbei kann der Druckabbau p_{ab} und Druckaufbau p_{auf} auch über die Zahnradpumpe erfolgen. Hierzu ist anstelle des Rückschlagventils RV ein nicht gezeichnetes Ventil MV in der Rückleitung zum Vorratsbehälter VB notwendig. Damit ist auch mit der zweiten Druckversorgungseinrichtung DV2 ein voller MUX-Betrieb möglich.

Die Steuer- und Regeleinrichtung ECU ist Bestandteil des gesamten Systems und des Packagings. Für eine fehlersichere Funktion ist eine redundante oder teilredundante ECU notwendig. Diese teilredundante ECU kann auch für bestimmte Funktionen zusätzlich zur redundanten ECU verwendet werden. In jedem Fall sind bzw. sollten die Ventile redundant über getrennte Ventiltreiber und Trennschalter angetrieben, der einen ausgefallenen Ventiltreiber abschaltet.

Zur Redundanz der Steuer- und Regeleinrichtung ECU ist auch ein redundantes Bordnetzanschluss notwendig. Auch kann ein Anschluss mit 48V für den Anschluss der Motoren verwendet werden. Vorteil bei 48V ist eine höhere Dynamik. Bei Ausfall des Motors von der Druckversorgungseinrichtung DV1 bei 48V ist Notbetrieb mit 12V mit ca. 50% Leistung gegeben mit red. Dynamik und Kostenersparnis. Hierzu ist eine Auslegung des Motors auf z.B. 24V notwendig.

Vorzugsweise wird im Bremskreis BK2 ein Druckgeber DG, ggf. auch in BK1 eingesetzt. Bei Ausfall des Druckgebers kann eine Druckregelung über die Strommessung der Motoren und Positionssteuerung des Kolbens über die p-v-Kennlinie erfolgen.

Alternativ kann die hydraulische Verbindung von der Druckversorgungseinrichtung des Bremskreises BK2 - wie in Figur 1b dargestellt und mit X bezeichnet - mit der inneren Verbindungsleitung VLa der Ventile BP1 und BP2 erfolgen. Bei dieser Alternative wirkt die Druckversorgungseinrichtung DV2 nicht mehr direkt in den Bremskreis BK2. Dies hat einen Vorteil bei einem Ausfall der Ventile BP2, SV und der Druckversorgungseinrichtung DV1. Hier kann der Ausfall von DV1 und DV2 vermieden werden, indem DV2 bei geschlossenem BP2 und PD1 in den Bremskreis BK1 wirkt. Zu berücksichtigen sind aber Dreifachfehler mit einer minimalen Ausfallwahrscheinlichkeit von ca. <5-10⁻¹⁸/Jahr mit Vergleich zum Ausfall Radkreis mit <5-10⁻⁶/Jahr, d.h. bei einer Million Fahrzeuge 5 Fehler pro Jahr. Verschiedene Nachteile stehen dagegen, z. B. bei Ausfall des Ventils FV (z.B. undicht), erfolgt auch Ausfall der Druckversorgung im Bremskreis BK2.

In der Druckleitung einer Druckversorgungseinrichtung DV1, DV2 kann ein Überdruckventil ÜV1, ÜV2 zum Schutz des Antriebes, insbesondere der Spindel und/oder des Kugelgewindetriebes, angeordnet sein, welches z.B. bei ca. 120 bar öffnet.

**Fig. 1a** zeigt die Funktion der Druckversorgungseinrichtungen DV1 und DV2 beim Druckaufbau p_{auf} und Druckabbau p_{ab}. Der Kolben der DV1 erzeugt das Volumen, das über das PD1-Ventil in den Bremskreis BK1 und über BP1 und BP2 in den Bremskreis BK2 gelangt. Der Druck wird über den Druckgeber DG gemessen. Zum Druckabbau p_{ab} bewegt sich der Kolben zurück mit entsprechender Rückströmung des Volumens. Bei höheren Drücken oder Ausfall von DV1 setzt die DV2 ein und fördert das Volumen direkt in Bremskreis BK2 und über die Ventile BP2 und BP1 in BK2, PD1 ist geschlossen. Der Druckabbau p_{ab} kann über die Druckversorgungseinrichtung DV1 erfolgen, wobei das Volumen von größer als 120 bar über das Schnüffelloch abströmt. Alternativ kann der Druckabbau p_{ab} über das zentrale Abführventil ZAV erfolgen. Auch hier erfolgt die Druckmessung und -regelung über den Druckgeber DG. Bei Ausfall des Druckgebers DG kann auch die Strom- und Wegmessung des Kolbens als Ersatzsignal verwendet werden.

Ein weiterer Vorteil ist die Möglichkeit zur Unterstützung der Parkierbremse EPB beim Parken. Mittels einer oder beiden Druckversorgungseinrichtungen DV1 und DV2 kann eine Vorspannung in der Parkierbremse erzeugt werden, so dass deren Elektromotor in Leistung und Moment reduziert ausgelegt werden kann. Aufgrund redundanter Druckversorgungseinrichtungen ist diese Anwendung ausreichend fehlersicher.

**Fig. 1b** zeigt die Auswirkung von Fehlern / Ausfall. Bei Ausfall des Bremskreises BK1 im Radzylinder oder Zuleitung wird das Schaltventil SV geschlossen. Bei Doppelfehler in der Radbremse und im Schaltventil SV fällt BK1 aus und über die Druckversorgungseinrichtung DV2 wird Druck im Bremskreis BK1 erzeugt. Analog bei Ausfall einer Radbremse RB und/oder Ventils SV im Bremskreis BK2. Dann erzeugt die Druckversorgungseinrichtung DV1 den Druck im BK1. Hierbei ist die Sicherheitsfunktion der redundanten Ventile BP1 und BP2 von großer Bedeutung.

**Fig. 1c** zeigt die Wirkung bei Ausfall beider Druckversorgungseinrichtungen DV1 und DV2, z. B. bei Bordnetzausfall. Hier wird der Druck über die Pedalbetätigung und Kolben erzeugt. Das Volumen gelangt über die Ventile FV, BP1 in BK1 und FV, BP2 in BK2 und WS. Zu erwähnen ist der ausfallsichere Hauptbremszylinder HZ mit den redundanten Dichtungen, was das Potenzial hat, die Anforderungen an die Redundanz des Bordnetzes zu verringern, um Kosten zu sparen. Hierbei kann eine Teilredundanz in der ECU für verschiedene Funktionen wie z. B. vereinfachte ABS-Regelung eingesetzt werden.

Die Ausführungen zeigen, dass durch konsequenten Einsatz von Redundanz mit Diagnose der schlafenden Fehler bei Undichtheit eine außerordentliche Fehlersicherheit gegeben ist. Durch die optimierte Ventilanordnung ergibt sich weniger Aufwand als konventionell und ein ausfallsicheres System. Doppelfehler mit gleichzeitigem Auftreten sind extrem selten, d.h. im Bereich von 10-9/Jahr. Bei extrem wichtigen Doppelfehlern wie Bremskreisausfall in der Radbremse oder im Schaltventil SV ist sogar der Totalausfall der Bremse vermeidbar, da noch ein Bremskreis voll wirksam zur Bremskraftverstärkung zur Verfügung steht.

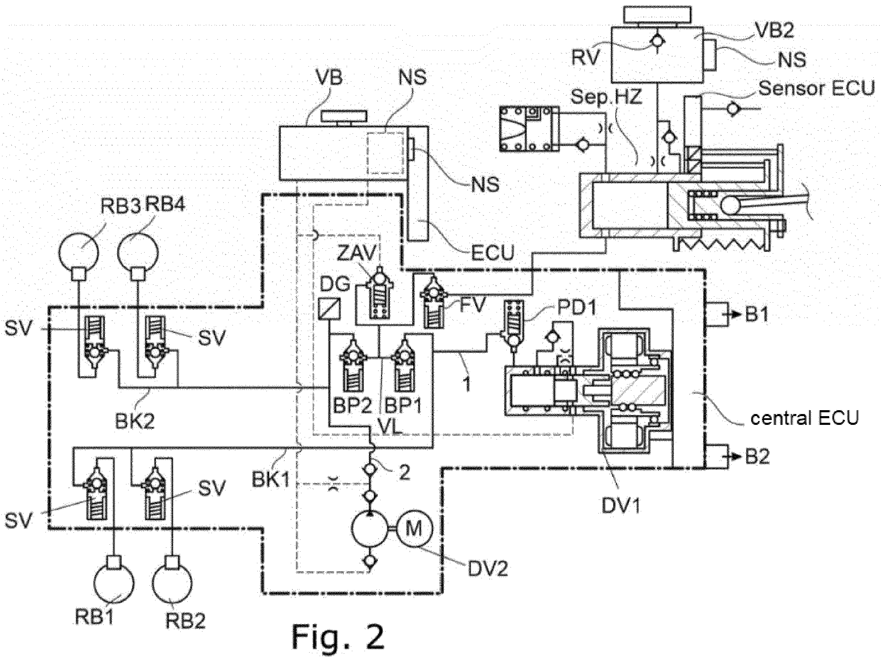

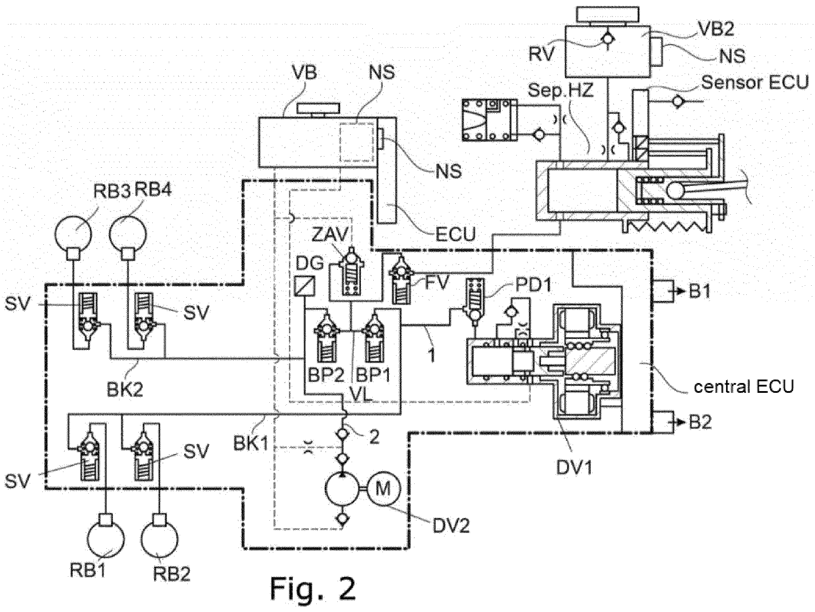

**Fig. 2** zeigt die eingangs erwähnte Möglichkeit der modularen Bremsweise mit separatem Hauptbremszylinder HZ zum Hauptaggregat, was Vorteile beim Einbau und der Geräuschübertragung zur Spritzwand bringt. Nachteilig ist ein getrennter Vorratsbehälter ggf. mit Niveaugeber und kleiner ECU zur Aufnahme der Sensorsignale und Übertragung der Signale zur zentralen ECU.

Ein weiteres Problem entsteht, wenn zur Diagnose des Hauptbremszylinders HZ zusätzliches Volumen von der Druckversorgungseinrichtung DV1 über die Drossel in den Vorratsbehälter VB2 gelangt. Lösung hierfür ist die Diagnose bei kleinem Druck < 5 bar. Bei der ohnehin für die Diagnose notwendigen Druckmessung ist keine Druckreduzierung ein Indiz, dass der Vorratsbehälter VB bereits voll ist. Hierbei hat der Deckel des VB ein RV integriert. Weiterhin wird nach der Diagnose ein bestimmtes Volumen von der DV aus dem VB abgesaugt. Somit kann der zusätzliche Niveausensor NS eingespart werden und eine Diagnose des HZ ist möglich.

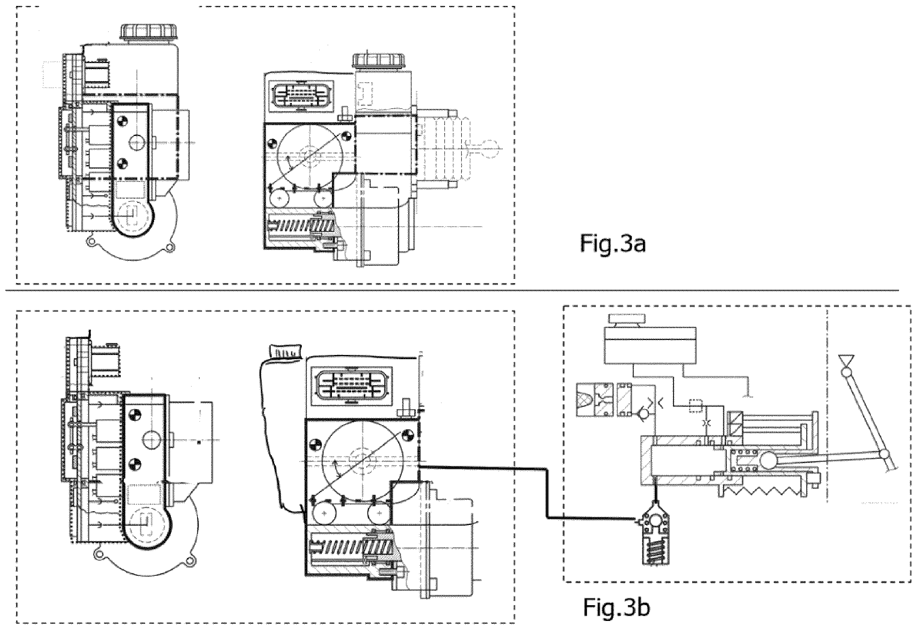

**Fig.3a** zeigt die konstruktive Ausführung der ersten und zweiten Ausführungsform als sog. 1-Box-System mit Anbringung der Betätigungseinheit an der Druckversorgung.

**Fig.3b** zeigt die konstruktive Ausführung der dritten Ausführungsform als sog. aufgelöstes System, wo Druckversorgung und Betätigungseinheit getrennt sind und über eine hydraulische Leitung verbunden sind. Gegenüber Fig.3a hat diese Ausführungsform den Nachteil, dass die Kosten höher sind und eine fehleranfällige Hydraulikleitung erforderlich ist, dahingegen den Vorteil, dass ein minimaler Platzbedarf an der Spritzwand ist und Geräuschquellen an der Spritzwand minimiert werden können. Zudem stellt diese Ausführungsform eine Grundlage für eine Lösung mit E-Pedal.

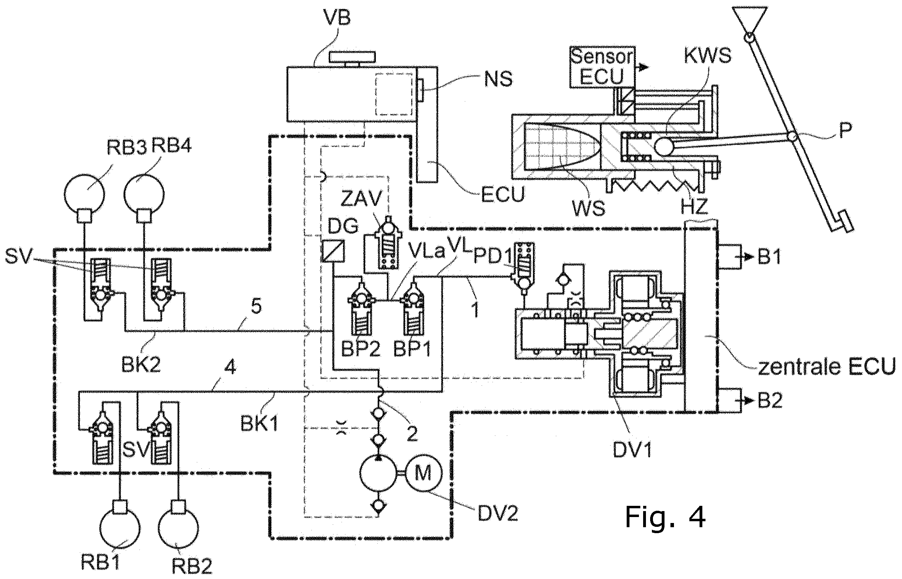

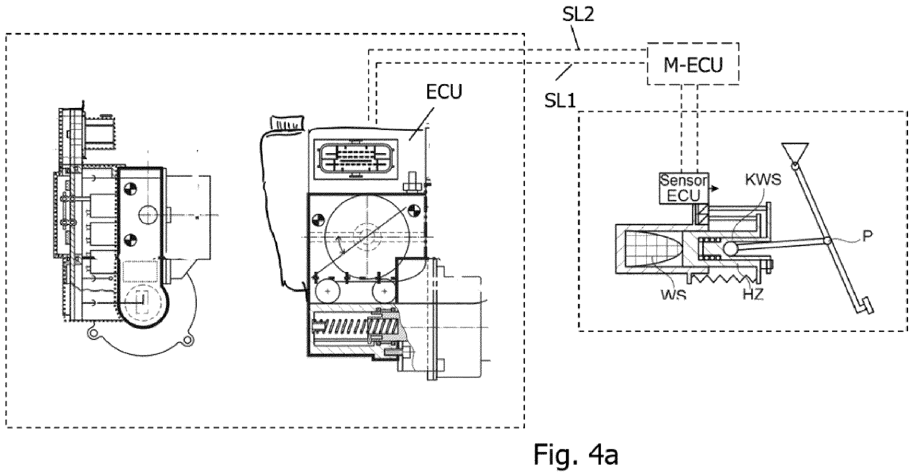

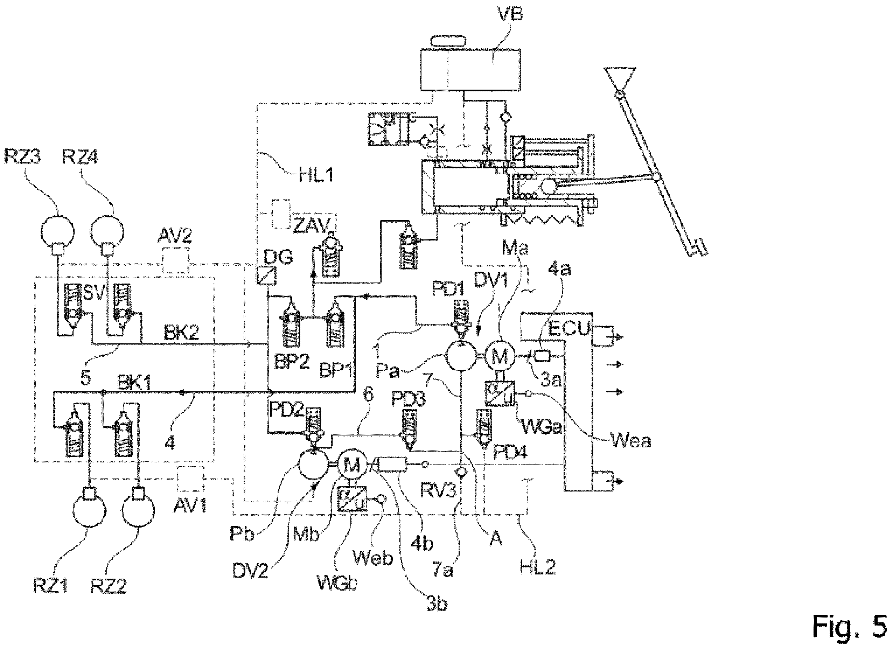

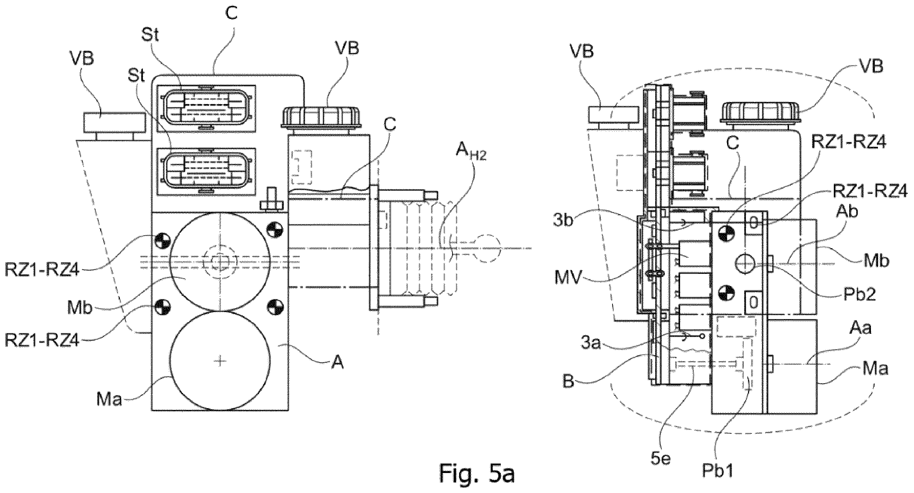

**Fig. 4** die vierte Ausführungsform des erfindungsgemäßen Hydrauliksystems mit getrenntem E-Pedal. die Druckversorgungseinrichtungen DV1 und DV2 mit Ventilanordnung. Hierbei ist ein elektr. Bremspedal, ein sog. E-Pedal, mit WS-Pedalwegsensoren mit kleiner Sensor-ECU und KWS ohne hydraulisch wirkenden Hauptbremszylinder HZ in einem Aggregat zusammengefasst sind. Dies hat Vorteile, wenn das Einbauvolumen im Aggregateraum klein ist oder die Geräuschanforderungen hoch. Anstelle des HZ mit Vorratsbehälter VB (nicht ausgeführt in Fig. 5) kann auch die Anordnung mit Pedalbetätigung mit WS sog. E-Pedal eingesetzt werden. Die Signale der Pedalwegsensoren werden in einer Sensor-ECU aufgearbeitet und der zentralen ECU zugeführt. Auch kann für Level 5 alternativ zum E-Pedal ein Bremsschalter eingesetzt werden.

Das o.g. Aggregat besitzt den 2-Kreis-VB mit Schwimmer und Niveausensor NS, der in der zentralen Steuer- und Regeleinheit ECU integriert sein kann. Dieser Niveausensor NS soll ebenfalls redundant ausgebildet sein und stetig das Niveau messen, da hierüber ein Volumenverlust durch Leck schnell erfasst wird. Da hier die Verbindung zum Hauptbremszylinder HZ fehlt und damit auch die Rückfallebene zum Hauptbremszylinder HZ bei dem Ausfall beider Druckversorgungseinrichtungen DV1 und DV2 und/oder des Bordnetzes, sind die Ventile BP1 und BP2 vorzugsweise als stromlos offene Ventile ausgeführt.

**Fig.4a** zeigte die Konstruktive Ausführung der vierten Ausführungsform. Hier ist ein E-Pedal ohne Hydraulik und die Druckversorgung als separate Einheit. Der Fahrerwunsch der Sensor ECU wird über redundante Signalleitungen SL1 und SL2 an die Druckversorgung übertragen. Die Ausführungsform ist nur einen kleinen Schritt entfernt von einer Lösung für AD5, wo die Betätigungseinheit komplett wegfällt und der Solldruck über eine zentrale Steuereinheit eines fahrerlosen Fahrzeuges vorgegeben wird.

**Figur 5** zeigt die Grundelemente eines regelbaren Bremssystems für Fahrzeuge, bestehend aus dem Hauptbremszylinder SHZ mit Wegsimulator WS und Vorratsbehältnis VB sowie zwei Druckversorgungseinrichtungen DV1 und DV2. Die Druckversorgungseinrichtung DV1 weist ihrerseits die Rotationspumpe Pa, den bürstenlosen Gleichstrommotor Ma, den Rotorwinkelgeber WGa von Motor Ma mit elektrischem Anschluss Wea, den Wicklungsanschluss 3a von Gleichstrommotor Ma sowie den Shunt 4a vom Gleichstrommotor Ma auf. Die Druckversorgungseinrichtung DV2 weist die Rotationspumpe Pb, den Gleichstrommotor Mb, den Wicklungsanschluss 3b von Gleichstrommotor Mb sowie den Shunt 4b vom Gleichstrommotor Mb auf. Beide Rotationspumpen Pa und Pb der beiden Druckversorgungseinrichtungen DV1 und DV2 sind, insbesondere 1-kreisige, Rotationspumpen. Die Rotationspumpe Pa kann bevorzugt eine Zahnradpumpe sein. Die Rotationspumpe Pa der Druckversorgungseinrichtung DV1 wird bevorzugt von einem bürstenlosen Gleichstrommotor (EC-Motor) Ma angetrieben, während die Rotationspumpe Pb der Druckversorgungseinrichtung DV2 von einem Gleichstrommotor Mb, vorzugsweise mit Bürsten, angetrieben wird. Die Rotationspumpe Pb kann eine einfache 1-kreisige Zahnradpumpe oder eine 1-kreisige Kolbenpumpe sein.

Die Druckversorgungseinrichtung DV1 ist für den üblichen Blockierdruck ausgelegt, wobei unter Blockierdruck der minimale Druck verstanden wird, bei dem alle Fahrzeugräder blockieren. Üblich ist für die meisten Fahrzeuge ein Blockierdruck von 120bar. Durch überhitzte Bremsen (Fading) oder durch Überladung des Fahrzeugs, kann der Blockierdruck ansteigen, so dass der maximale Druck, der mit der Druckversorgungseinrichtung DV1 erreicht werden kann, z.B. 120bar, nicht zum Blockieren aller Fahrzeugräder ausreicht. Aus diesem Grund ist die Druckversorgungseinrichtung DV2 für höhere Drücke als die Druckversorgungseinrichtung DV1 ausgelegt, z.B. für 200bar. Beide Druckversorgungseinrichtungen DV1 und DV2 können einzeln oder zusammen den Radbremszylinderdruck erzeugen, welcher mittels geeigneter Ventilstellungen einer Ventilschaltung auf die Radbremszylinder RZ1, RZ2, RZ3, RZ4, z. B. bei ABS, in den jeweiligen Radbremszylindern eingestellt bzw. eingeregelt wird. Dies ist im Prinzip Stand der Technik. Die erfindungsgemäße Druckversorgungseinheit für ein Hydrauliksystem oder Bremssystem soll jedoch eine hohe Fehlersicherheit z.B. für Hochautomatisiertes (HAD) oder Vollautomatisiertes Fahren (FAD) aufweisen. Hierzu sollten alle ausfallrelevanten Komponenten berücksichtigt werden, wie z. B. Ventile, Sensoren, Dichtungen, Motoren und Bremskreise. Vorteilhaft sollten daher folgende Komponenten bzw. Hydraulikverbindungen ausfallsicher ausgebildet sein:
(1) Verbindung von der für den ersten Bremskreis BK1 vorgesehenen Druckversorgungseinrichtung DV1 zum zweiten Bremskreis BK2;
(2) Verbindung von der für den zweiten Bremskreis BK2 vorgesehenen Druckversorgungseinrichtung DV2 zum ersten Bremskreis BK1;
(3) Verbindung von dem Druckraum des Hauptbremszylinders SHZ über das Schaltventil FV hin zu den Bremskreisen BK1, BK2 über die Bypassventile BP1 und BP2;
(4) Verbindung von Schaltventil PD1 und Bypassventil BP1 zu den Radbremszylindern RZ1 und RZ2 über die jeweiligen den Radbremsen zugeordneten Schaltventile SV
(5) Verbindung von Bypassventil BP2 zu den Radbremszylindern RZ3 und RZ4 über die jeweiligen den Radbremsen zugeordneten Schaltventile SV;
(6) Verbindung von einem Bremskreis BK1, BK2 hin zum Vorratsbehältnis VB;
(7) Verbindungen zwischen Bremskreisen BK1, BK2 hin zu den Radbremszylindern RZ.

Diese hydraulischen Verbindungen mit möglichen Ausfallfehlern der einzelnen Komponenten werden im Folgenden beschrieben.

Die Druckversorgungseinrichtung DV1 wirkt vom Bremskreis BK1 in den Bremskreis BK2 über die Hydraulikleitungen 1, 2 und 5 und über die Schaltventile SV zu den Radbremszylinder RZ1, RZ2, RZ3, RZ4. Im Stand der Technik wird hierzu lediglich ein einziges Bypassventil eingesetzt. Ein Ausfall des einzigen Bypassventils kann hier einen Totalausfall der Bremse bewirken, wenn noch ein schlafender Fehler bei einem weiteren Ventil hinzukommt. Unter "schlafender Fehler" wird ein Einzelfehler verstanden, der sich bei der Bremsung nicht auswirkt, der sich aber in Kombination mit einem anderen Fehler bei der Bremsung wohl auswirken kann. Die Erfindung sieht daher zwei redundante Bypassventile BP1 und BP2 vor, um die Verbindung hin zum Bremskreis BK2 von der ersten Druckversorgungseinrichtung DV1 zu ermöglichen. Schlafende Fehler der Bypassventile BP1 und BP2 werden mittels Druckgeber DG erkannt, indem während einer Druckänderung durch die Druckversorgungseinrichtung DV1, die Bypassventile BP1 und BP2 abwechselnd nacheinander über eine kurze Zeitdauer geschlossen werden. Während der Schließphase von Bypassventil BP1 oder Bypassventil BP2 muss der Druck in Bremskreis BK2 konstant bleiben. Bei Ausfall der ersten Druckversorgungseinrichtung DV1, z.B. bei Ausfall des Gleichstrommotors Ma, wird eine Rückwirkung auf Bremskreis BK2 über die zwei redundanten Bypassventile BP1, BP2 und das Schaltventil PD1 verhindert. Die Bypassventile BP1 und BP2 sind vorzugsweise stromlos offene Ventile, damit bei Ausfall der Druckversorgungseinrichtungen DV1 und DV2 der Hauptbremszylinder SHZ über das offene Schaltventil FV auf beide Bremskreise BK1 und BK2 wirken kann. Soll der Druck in den Radbremszylindern RZ1, RZ2, RZ3 und RZ4 reduziert werden so kann dies durch das Öffnen der Schaltventile ZAV oder FV erfolgen. Dabei können die beiden Verbindungsschaltventile bzw. Bypassventile BP1 und BP2 ohne eigene elektrische Ansteuerung, durch den wirkenden Differenzdruck über diese Bypassventile BP1 und BP2 selbstständig öffnen, wodurch im Fehlerfall, z.B. bei Ausfall der Ansteuerelektronik der beiden Bypassventile BP1 und BP2, sichergestellt ist, dass ein Druckabbau möglich ist und z.B. ein Blockieren der Räder sicher verhindert wird.

Entsprechend wirkt die Druckversorgungseinrichtung DV2 in dem zweiten Bremskreis BK2 über die Hydraulikleitungen 2 und 5 und über die Schaltventile SV zu den Radbremszylindern RZ3 und RZ4, und über die Bypassventile BP2 und BP1 in die Hydraulikleitung 4 und von dort über die Schaltventile SV zu den Radbremszylindern RZ1 und RZ2. Ein Ausfall des Bremskreises BK1, z.B. durch Undichtigkeit einer Dichtung in einem der Radbremszylinder RZ1, RZ2, kann durch Diagnose mittels eines der Schaltventile SV in Bremskreis BK1 erkannt werden, wobei dann die Bypassventile BP1 und BP2 geschlossen werden, womit ein Ausfall der Druckversorgungseinrichtung DV2 verhindert wird und mittels der Druckversorgungseinrichtung DV2 im Bremskreis BK2 eine Druckregelung bzw. -steuerung weiterhin möglich ist. Ein Ausfall des Bremskreises BK2, z.B. durch Undichtigkeit einer Dichtung in einem Radbremszylinder RZ3 oder RZ4, kann durch Diagnose mittels eines der Schaltventile SV in Bremskreis BK2 erkannt werden, wobei dann ebenfalls die Bypassventile BP1 und BP2 geschlossen werden, womit ein Ausfall der Druckversorgungseinrichtung DV1 verhindert wird und mittels der Druckversorgungseinrichtung DV1 im Bremskreis BK1 eine Druckregelung bzw. -steuerung weiterhin möglich ist. Hierbei sind Undichtigkeiten aller Ventile z.B. SV, BP1, BP2 sicherheitskritisch als schlafende Fehler zu betrachten. So enthält das die Ventile durchströmende Hydraulikmedium Schmutzpartikel, welche ein Schließen des jeweiligen Ventils verhindern können und die Ventile somit undicht werden. Im vorliegenden Fall kann z.B. bei Ausfall einer Dichtung eines Radbremszylinders RZ1 oder RZ2 und durch den schlafenden Fehler des zugehörigen Schaltventils SV zwar der der Bremskreis BK1 ausfallen, der Bremskreis BK2 ist jedoch durch die Zwischenschaltung der beiden Bypassventile BP1 und BP2 abgesichert. In ähnlicher Weise kann z.B. bei Ausfall einer Dichtung eines Radbremszylinders RZ3 oder RZ4 und durch den schlafenden Fehler des zugehörigen Schaltventils SV zwar der Bremskreis BK2 ausfallen, der Bremskreis BK1 ist jedoch ebenfalls durch die Zwischenschaltung der beiden Bypassventile BP1 und BP2 abgesichert. Es müsste hier ein Dreifachfehler vorliegen, d.h. beide Bypassventile BP1 und BP2 müssten zusätzlich ausfallen, damit ein Totalausfall beider Bremskreise BK1 und BK2 vorliegt. Jeder der beiden Bremskreise BK1 und BK2 ist somit sicher gegen Doppelfehler geschützt und verhindert einen Totalausfall der Bremse. Sicherheit gegen Doppelfehler, wenn schlafende Fehler auftreten können, ist ein entscheidendes Sicherheitsmerkmal für HAD und FAD. Auch die Aufrechterhaltung der Druckversorgung oder des Bremskraftverstärkers bei Bremskreisausfall zählt dazu.

Die Druckversorgungseinrichtung DV2 kann dabei, bei schnellem Druckaufbau, oder Druckaufbau über z.B. 120 bar, die andere Druckversorgungseinrichtung DV1 unterstützen und/oder die ABS-Funktion vornehmen und/oder bei Ausfall der anderen Druckversorgungseinrichtung DV1 dessen Funktion mit übernehmen. Ein Druckabbau kann dabei mittels einer Rotationspumpe Pa, PBb oder sofern vorhanden auch alternativ oder gleichzeitig mittels mindestens eines Auslassventils ZAV, AV1, AV2 erfolgen.

Ebenso ist es möglich, dass die Druckversorgungseinrichtung DV1 den Druckaufbau für Druckbereiche kleiner gleich 120 bar und für die ABS-Funktion übernimmt. Der Druckabbau in einem Bremskreis erfolgt dabei durch Umkehr der Drehrichtung der Rotationspumpe Pa. Bei Ausfall der Druckversorgungseinrichtung DV2 steht, sofern die Druckversorgungseinrichtung DV1 nur auf einen maximalen Druck von z.B. 120 bar ausgelegt ist, nur dieser maximale Druck von z.B. 120 bar für beide Bremskreise BK1 und BK2 zur Verfügung.

Bei geschlossenen Bypassventile BP1 und/oder BP2 können die beiden Druckversorgungseinrichtungen DV1 und DV2 in ihren Bremskreisen BK1 und BK2 den Druck unabhängig voneinander einregeln bzw. -stellen. Auch hier kann der Druckabbau über die Rotationspumpe Pa erfolgen. Sofern jedoch zusätzliche Auslassventile ZAV, AV1, AV2 vorhanden sind, kann auch über diese der Druck in einer oder mehreren Radbremsen abgebaut werden. So kann auch ein gleichzeitiger Druckabbau mittels einer Rotationspumpe, z.B. Pa, z.B. in der Radbremse RZ1 durch Umkehr der Drehrichtung der Rotationspumpe Pa erfolgen, wobei gleichzeitig z.B. in der Radbremse RZ3 über die Rotationspumpe Pb oder über ein Auslassventil AV2, ZAV der Druck abgebaut wird.

Die Pedalbewegung wird über redundante Pedalwegsensoren PS gemessen, die zugleich auf ein KWS-Messelement (Kraft-Weg-Sensor) nach WO2012/059175 A1 wirken. Mit den Signalen der Pedalwegsensoren wird die Druckversorgungseinrichtung DV1 angesteuert, wobei die Rotationspumpe Pa den Volumenfluss in der Hydraulikleitung 1 in dem Bremskreis BK1 und über die redundanten Bypassventile BP1 und BP2 in den Bremskreis BK2 bewirkt. Die Druckversorgungseinrichtung DV1 kann so ausgelegt werden, dass sie nur bis zum Blockierdruck z. B. 120 bar wirkt. Für höhere Drücke liefert dann die Druckversorgungseinrichtung DV2 Volumen in den Bremskreis BK2 und über die redundanten Bypassventile BP1 und BP2, und bei geschlossenem Schaltventil PD1, in Bremskreis BK1. Dabei kann die Druckversorgungseinrichtung DV2 eine kontinuierlich fördernde Pumpe sein. Ist das Bremssystem schlecht entlüftet oder entsteht Dampfblasenentwicklung mit mehr Volumenbedarf, so wird dies über die bekannte Druckvolumenkennlinie (PV-Kennlinie) der Bremse erfasst, was zur Folge hat, dass die Druckversorgungseinrichtung DV1 mehr Volumen liefern muss, um einen bestimmten Druck in den Radbremszylindern RZ1, RZ2, RZ3 und RZ4 zu erreichen. Bei einer Pedalbetätigung wird der Kolben Ko bewegt, welcher über den pedalkraftproportionalen Druck auf den bekannten Wegsimulator WS wirkt und damit die Pedalcharakteristik bestimmt. Der Wegsimulator WS kann üblicherweise über ein Ventil abgeschaltet werden, insbesondere in der Rückfallebene bei ausgefallenen Druckversorgungseinrichtungen DV1 und DV2. Bei redundanter Druckversorgungseinrichtungen ist dies aufgrund der sehr geringen Ausfallwahrscheinlichkeit im Prinzip nicht mehr relevant.

Über die Leitung 3 kann der Hauptbremszylinder SHZ mit den Bremskreisen BK1 oder BK2 verbunden sein, wobei in der Hydraulikleitung 3 das Schaltventil FV zum Verschließen derselben angeordnet ist. Diese Verbindung ist nur in der Rückfallebene, d.h. wenn beide Druckversorgungseinrichtungen DV1 und DV2 ausgefallen sind, wirksam. Sofern die Hydraulikleitung 3 mit der Verbindungsleitung VLa der beiden Bypassventile BP1 und BP2 verbunden ist, bilden die beiden Bypassventile BP1 und BP2 eine weitere Redundanz. Eine übliche Verbindung vom Schaltventil FV direkt in einen der beiden Bremskreise BK1, BK2 hätte bei undichtem Schaltventil FV zur Folge, dass der Bremskreis und damit die Druckversorgung auf den SHZ-Kolben Ko wirkt, was unmittelbar das Abschalten der Druckversorgung zur Folge haben muss.

Ein Ausfall des Bremskreises BK2 kann, z.B. bei Verwendung einer 1-kreisigen Zahnradpumpe als Rotationspumpe Pb, durch eine Undichtigkeit des Rückschlagventils RV1 entstehen. Der Ausfall der Druckversorgungseinrichtung DV2 kann hier durch ein redundantes Rückschlagventil RV2 verhindert werden. Eine hydraulische Verbindung zwischen den beiden Rückschlagventilen RV1 und RV2 zum Vorratsbehälternis VB mit der Drossel Dr mit kleinem Durchfluss ermöglicht die Diagnose, z. B. über messbaren Druckabfall.

Für die ABS-Regelung oder zur Druckreduzierung mit der zweiten Druckversorgungseinrichtung DV2 ist ein zentrales Auslassventil ZAV notwendig. Der Volumenfluss geht dabei zusätzlich über die Bypassventile BP1 oder BP2, so dass ein undichtes ZAV für den Normalbetrieb nicht kritisch ist, da bei Undichtigkeit des zentralen Auslassventils ZAV die Drucksteuerung in BK1 über die Druckversorgungseinrichtung DV1 und die Drucksteuerung in BK2 über die Druckversorgungseinrichtung DV2 für den Druckaufbau erfolgt. Der Druckabbau im Bremskreis BK2 kann weiterhin auch bei undichtem Auslassventil ZAV über das Bypassventil BP2 erfolgen. Außerdem wird der Fehler, auch schlafend, von ZAV gleich durch Druckänderung oder erhöhte Volumenförderung der Druckversorgungseinrichtung DV1 erkannt.

Bei normaler Bremsung bis ca. 120 bar wirkt die Druckversorgungseinrichtung DV1 über geöffnete Bypassventile BP1 und BP2 in beide BK Bremskreise BK1 und BK2. Für extreme Sicherheitsanforderungen kann auch ein redundantes Auslassventil ZAVr in der Hydraulikleitung 6 vom zentralen Auslassventil ZAV zum Vorratsbehältnis VB eingebaut werden.

Die ABS-Funktion über Multiplexbetrieb MUX und der Druckversorgungseinrichtung DV1 erfolgt wie in WO 2006/111393 A1 beschrieben. Allerdings wird bei der Rotationspumpe, insbesondere in Form einer Zahnradpumpe, zum Druckabbau die Rotationsrichtung umgekehrt. Erweiterte Multiplexfunktionen ergeben sich durch ein zentrales Auslassventil ZAV. Ist beim Druckaufbau Pauf im Bremskreis BK1 gleichzeitig ein Druckabbau Pab im anderen Bremskreis BK2 notwendig, so erfolgt dieser Druckabbau über das zentrale Auslassventil ZAV bei gleichzeitig geschlossenem Bypassventil BP1. Dadurch ist der Multiplexbetrieb MUX nur durch zwei Radbremszylinder RZ1 und RZ2 im Bremskreis BK1 belastet. So kann z.B. nicht zugleich ein Druckaufbau Pauf in Radbremszylinder RZ1 und ein Druckabbau Pab in Radbremszylinder RZ2 des Bremskreises BK1 erfolgen. Alternativ kann auch ein Auslassventil AV1 bzw. AV2 im jeweiligen Bremskreis BK1 bzw. BK2 zum Druckabbau Pab zur Entlastung des Multiplexbetriebs MUX verwendet werden. Dabei kann einerseits das Auslassventil AV1 bzw. AV2 entweder zwischen einem Schaltventil SV und einem Bypassventil BP1 bzw. BP2 oder aber zwischen dem Radbremszylinder und dem zugehörigen Schaltventil SV angeordnet bzw. angeschlossen werden, und andererseits zum Vorratsbehältnis VB angeschlossen werden, so dass ein direkter Druckabbau Pab über das Auslassventil hin zu dem Vorratsbehältnis VB erfolgen kann. Dies ist insbesondere zum Druckabbau Pab in den Radbremszylindern der Vorderräder sinnvoll. Das zentrale Auslassventil ZAV wird bei dieser Alternative nicht benötigt.

Die ABS-Funktion mittels der zweiten Druckversorgungseinrichtung DV2 erfolgt in diesem Fall leicht eingeschränkt, insbesondere ist kein Druckaufbau Pauf in einem Radbremszylinder während eines Druckabbaus Pab in einem anderen Radbremszylinder möglich bzw. vorgesehen. Eine voll individuelle ABS-Regelung ist trotzdem möglich. Zu berücksichtigen ist der seltene Einsatz der Druckversorgungseinrichtung DV2 bei Drücken größer 120 bar und bei Ausfall der ersten Druckversorgungseinrichtung DV1.

Typisch für den o.g. Multiplexbetrieb MUX bei z.B. ABS-Betrieb ist, dass die Druckregelung mit der Druckversorgungseinrichtung DV1 über die Volumenzumessung, welche mittels der Rotordrehung bzw. des Rotorverdrehwinkels der Rotationspumpe, welche mittels dem Rotorwinkelgeber WGa gemessen wird, berechnet wird. Hierbei kann auch die Druck-Volumen-Kennlinie der Bremse (PV-Kennlinie) berücksichtigt werden.

Bei Verwendung einer einfachen Exzenterkolbenpumpe als Rotationspumpe Pb bei der Druckversorgungseinrichtung DV2 kann dies nicht über die Kolbenbewegung, jedoch über die Förderzeit, welche proportional zum geförderten Volumen bei zusätzlicher Drehzahlmessung und ggfs. Druckmessung ist, erfolgen. Somit ist auch eine Volumenzumessung für den Druckaufbau mittels der Druckversorgungseinrichtung DV2 möglich. Vorteilhaft ist hier ein serieller und nicht gleichzeitiger Druckaufbau Pauf in den einzelnen Radbremszylindern.

Zu berücksichtigen ist dabei die Ventildimensionierung der Staudruck am Ventil, insbesondere bei den Bypassventilen BP1 und BP2 bei schnellem Druckaufbau Pauf in den Bremskreisen. Der Staudruck an den Bypassventilen BP1 und BP2 wirkt als Druckdifferenz zwischen den Bremskreisen BK1 und BK2. Dieser kann erheblich reduziert werden, wenn in diesem Betriebszustand beide Druckversorgungseinrichtungen DV1 und DV2 eingeschaltet werden. Hier bietet sich auch eine 1-kreisige Zahnradpumpe bei der Druckversorgungseinrichtung DV2 anstelle einer Kolbenpumpe an. Hierbei kann der Druckabbau Pab und Druckaufbau Pauf auch über die Zahnradpumpe erfolgen. Hierzu ist anstelle der Rückschlagventile RV1 und RV2 ein nicht gezeichnetes Schaltventil in der Rückleitung zum Vorratsbehältnis VB notwendig. Damit ist auch mit der zweiten Druckversorgungseinrichtung DV2 ein voller Multiplexbetrieb MUX möglich.

Die Steuer- und Regeleinrichtung ECU in Gehäuse B ist Bestandteil des gesamten Systems und des Packagings. Für eine fehlersichere Funktion ist eine redundante oder teilredundante ECU notwendig. Diese teilredundante ECU kann auch für bestimmte Funktionen zusätzlich zur redundanten ECU verwendet werden. In jedem Fall sind bzw. sollten die Ventile redundant über getrennte Ventiltreiber und Trennschalter angetrieben werden, der einen ausgefallenen Ventiltreiber abschaltet.

Zur Redundanz der Steuer- und Regeleinrichtung ECU in Gehäuse B ist auch ein redundanter Bordnetzanschluss BN1 bzw. BN2, oder ein Hilfsbordnetzanschluss mit z.B. U-Caps BN2', falls der redundante Bordnetzanschluss BN2 nicht zur Verfügung steht, notwendig. Auch kann ein Anschluss mit 48V für den Anschluss der Motoren verwendet werden. Vorteil bei 48V ist eine höhere Dynamik. Bei Ausfall des Motors von der Druckversorgungseinrichtung DV1 bei 48V ist Notbetrieb mit 12V mit ca. 50% Leistung mit reduzierter Dynamik gegeben, wodurch sich vorteilhaft eine Kostenersparnis ergibt. Hierzu ist eine Auslegung des Motors auf z.B. 24V notwendig.

Vorzugsweise wird im Bremskreis BK2 ein Druckgeber DG, ggf. auch in BK1 (wie gestrichelt eingezeichnet) eingesetzt. Bei Ausfall des Druckgebers kann eine Druckregelung über die Strommessung der Motoren und Winkelsteuerung der Rotoren, insbesondere in Form von Zahnrädern, über die Druck-Volumen-Kennlinie (PV-Kennlinie) erfolgen.

In der Hydraulikleitung 2 der Druckversorgungseinrichtung DV2 kann zudem ein Überdruckventil ÜV zum Schutz des Antriebes angeordnet sein, welches z.B. bei ca. 120 bar öffnet.

Die **Figur 5a** zeigt eine mögliche Ausführungsform des erfindungsgemäßen Packaging bzw. Aufbaus für die erfindungsgemäße Druckversorgungseinheit. Dabei sind folgende Hauptfunktionsblöcke zu berücksichtigen:
A Hydraulikgehäuse HCU
B elektrisches Steuergerät ECU
C Hauptzylinder HZ, optional mit Wegsimulator WS, Vorratsbehältnis VB und/oder Pedalsensor PS

Diese Hauptfunktionsblöcke sind in DE 10 2015 104 246 A1 und DE 10 2016 105 232 A1 eingehend beschrieben, wobei diese Dokumente zur Erläuterung von hier nicht beschriebenen Details dienen können.

Das Hydraulikgehäuse A ist eine wesentliche Komponente der erfindungsgemäßen Druckversorgungseinheit, in dem mindestens eine - vorzugsweise alle - Rotationspumpe(n) Pa, Pb, Pb1 mindestens einer Druckversorgungseinrichtung DV1, DV2 angeordnet ist bzw. sind. Sofern Motorgehäuse für die Rotationspumpen Pa, Pb vorgesehen sind, so können diese Motorgehäuse Ma, Mb der Rotationspumpen Pa, Pb entweder in oder an dem Gehäuse A angeordnet sein.

Im Gehäuse A können auch die mechanischen und/oder elektrischen Verbindungen zum Gehäuse B der elektrischen Steuereinheit ECU platziert werden. Weiterhin können in dem Gehäuse A Magnetventile, Rückschlagventile und/oder Druckgeber angeordnet sein, insbesondere mit Verbindung zum Hauptbremszylinder HZ, den Radbremszylindern RZ1-RZ4 sowie den Druckversorgungseinrichtungen DV1, DV2. Sowohl die Magnetventile als auch die Druckgeber benötigen eine Verbindung zur ECU. Auch kann der Single- bzw. Tandem-Hauptbremszylinder HZ, THZ mit in dem Gehäuse A angeordnet sein.

Das Gehäuse bzw. der Block B ist dicht, insbesondere großflächig anliegend, an dem Gehäuse A angeordnet bzw. mit diesem verbunden und beinhaltet die Bauelemente und (Steck-)Kontakte der Steuerelektronik, welche auf einer Leiterplatte PCB angeordnet sind. Ebenso sind die Stecker zum Bordnetz in oder an dem Gehäuse B angeordnet bzw. befestigt.

Die Steuereinheit ECU kann voll redundant oder auch nur in teilen redundant (nachfolgend teilredundant genannt) ausgeführt sein. So kann z.B. ein doppelter Bordnetzanschluss oder auch eine zweite redundante Leiterplatter vorgesehen werden.

Am Gehäuse A sind die hydraulischen Verbindungsleitungen zu den Bremskreisen und Radbremszylindern RZ1-RZ4 angeschlossen. Die hydraulischen Anschlüsse für die Verbindungsleitungen können seitlich oder auch stirnseitig an dem Gehäuse A angeordnet sein. Es ist auch möglich, dass die hydraulischen Anschlüsse in einem Winkel, z.B. 45° gegenüber der Horizontalen, am Gehäuse A angeordnet sind, so dass sich ein günstiger Anschlusswinkel ergibt und/oder die Druckversorgungseinheit möglichst klein und kompakt baut.

Sofern der Single- bzw. Tandem-Hauptbremszylinder HZ, THZ nicht mit im Gehäuse A angeordnet ist, so ist hierfür ein weiteres Gehäuse C vorzusehen. In diesem Gehäuse C kann zusätzlich noch ein evtl. vorhandener Wegsimulator WS und/oder Pedalsensor PS enthalten sein. Ein elektrisches und/oder mechanisches Interface besteht dabei zu dem Gehäuse B bzw. der elektronischen Steuereinheit ECU.

Vorzugsweise sind die Gehäuse A und C in Richtung der Achse A_{HZ} hintereinander angeordnet, wobei das Gehäuse B in Achsrichtung A_{HZ} neben dem Gehäuse A angeordnet ist. Die Achsen Aa, Ab der Motoren Ma, Mb sind vorzugsweise senkrecht zu A_{HZ} ausgerichtet.

Der Einfülldeckel des Vorratsbehälters VB kann vor den Gehäusen A, B und C oder auch seitlich und/oder oberhalb deren Mitte angeordnet sein.

Die **Figur 5a** zeigt die Ansicht von vorn bzw. in Richtung der Achse A_{HZ}. Im Gehäuse A sind die Rotationspumpen Pa, Pb angeordnet. Die elektrischen Motoren Ma, Mb für die Rotationspumpen Pa, Pb können mit ihren Gehäusen an dem Gehäuse A angrenzen bzw. an diesem befestigt sein. Es ist jedoch ebenso möglich, dass die Motoren Ma, Mb mit im Gehäuse A angeordnet sind. Die Motorachsen Aa und Ab sind vorzugsweise parallel zueinander ausgerichtet. Wie in Figur 5a gezeigt, sind die Motorenachsen Aa, Ab senkrecht zur Achse A_{HZ} des Hauptbremszylinders angeordnet.

Die Magnetventile MV, und die elektrischen und mechanischen Verbindungen 3a, 3b und 5c hin zur ECU bzw. zum Gehäuse B sind ebenfalls im Gehäuse A angeordnet.

**Figur 5a** zeigt ebenso den alternativen stirnseitigen Anschluss der hydraulischen Anschlüsse für die Radbremszylinder RZ1-RZ4. Auch ist die Lage des Einlassstutzens für den Vorratsbehälter VB vorn oder in der Mitte ist dargestellt. Insgesamt stellt die dargestellte Anordnung der einzelnen Komponenten eine kompakte Baueinheit mit sehr kleinen Abmessungen dar.

Der Block C bzw. das Gehäuse C kann getrennt von den Gehäusen A und B z.B. direkt an der Spritzwand des Fahrzeugs mit Verbindung zum Pedalinterface angeordnet werden. Die Blöcke A und B können an passender Stelle im Aggregateraum oder Motorraum angeordnet werden, wobei dann die Achsen Aa, Ab der Motoren Ma, Mb nicht mehr rechtwinklig zur Achse des Hauptbremszylinders HZ, THZ angeordnet werden muss.

Die Figur 3b zeigt eine perspektivische Ansicht der Druckversorgungseinheit gemäß Figu-ren 3 und 3a. Das Gehäuse A ist neben dem Gehäuse B angeordnet, wobei das Gehäuse C an den Stirnseiten A1, B1 der Gehäuse A und B anliegt. Der Einfüllstutzen VB_{E} für den Vorratsbehälter VB ist an der Vorderseite und oberhalb der Gehäuse A, B, C angeordnet.

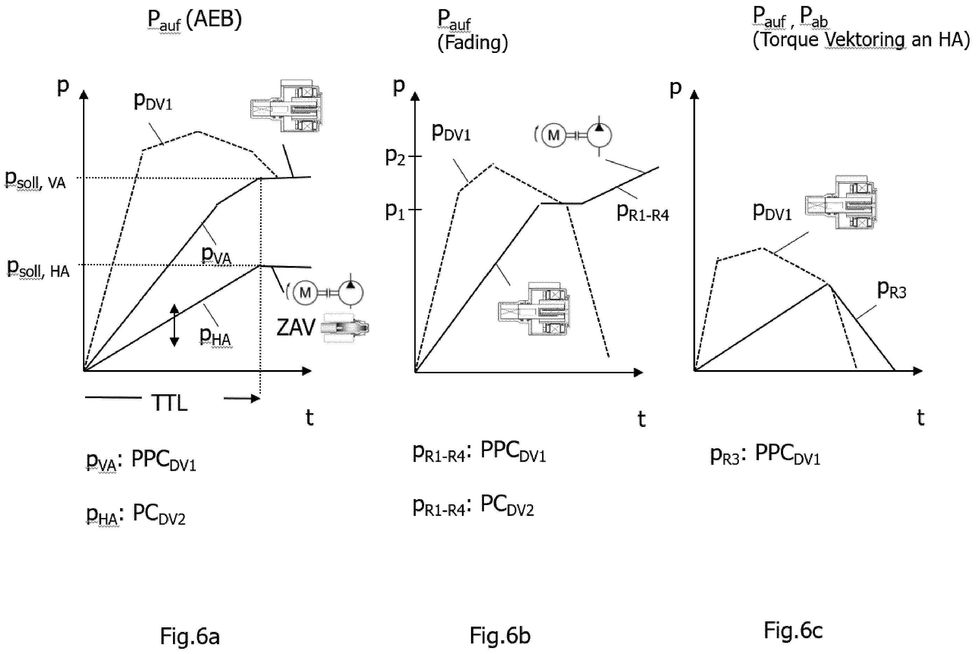

**Fig.6a** zeigt einen schnellen Druckaufbau durch beide Druckversorgungen DV1 und DV2 an zwei Achsen. Der Druckaufbau an der Vorderachse p_{VA} erfolgt durch die DV1 mit entsprechender variabler Vordruckregelung p_{DV1} bis zum Solldruck Pₛₒₗₗ, _{VA}. Der Vordruck bestimmt die Druckdifferenz und somit den Druckgradienten, die Magnetventile zwischen Druckversorgung und Radbremse sind hierbei vollständig geöffnet . Gleichzeitig erfolgt der Druckaufbau an der Hinterachse p_{HA} über die zweite Druckversorgung DV2 mit entsprechender Vordruckregelung (nicht eingezeichnet) bis zum 2. Solldruck pₛₒₗₗ, _{HA}. Der Druckaufbau der DV2 erfolgt hier klassisch wie bei Standardbremsregelsysteme (ABS, ESP) mit Kolbenpumpen, wobei mindestens ein Magnetventil (z.B. ZAV-Ventil) zur Druckregelung verwendet wird. Zur Steuerung der Druckveränderung wird das Magnetventil optional, getaktet, oder pulsweitenmoduliert gesteuert.

Durch den simultanen Druckaufbau kann entweder die Zeit zum Blockierdruck (TTL) im Vergleich zu Systemen mit nur einer Druckversorgung signifikant reduziert werden, bzw. die Druckversorgungen können in der Leistung downgesized werden, womit sich die Differenzkosten von zwei Druckversorgungen zu nur einer Druckversorgung stark reduzieren lassen.

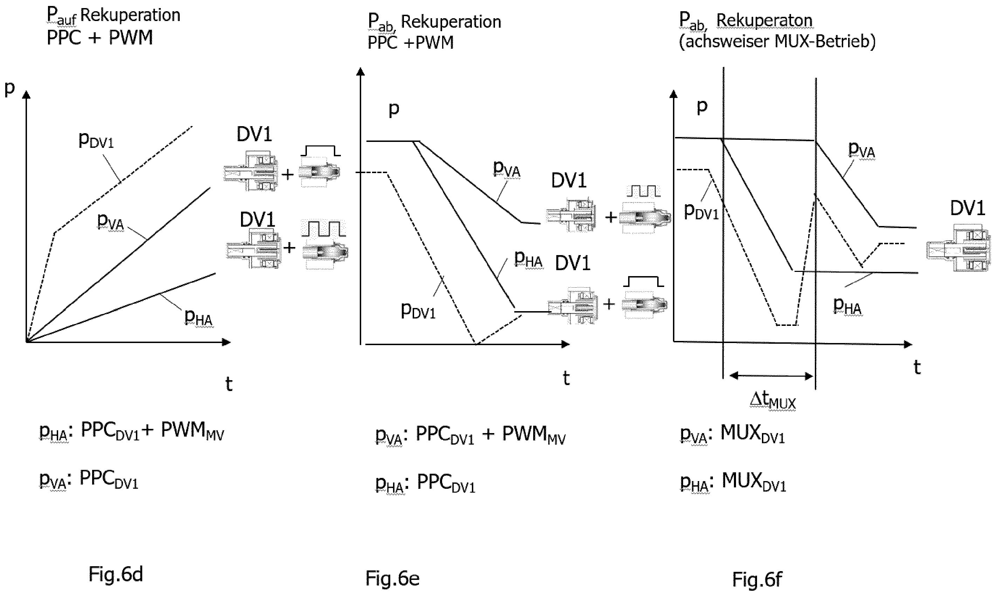

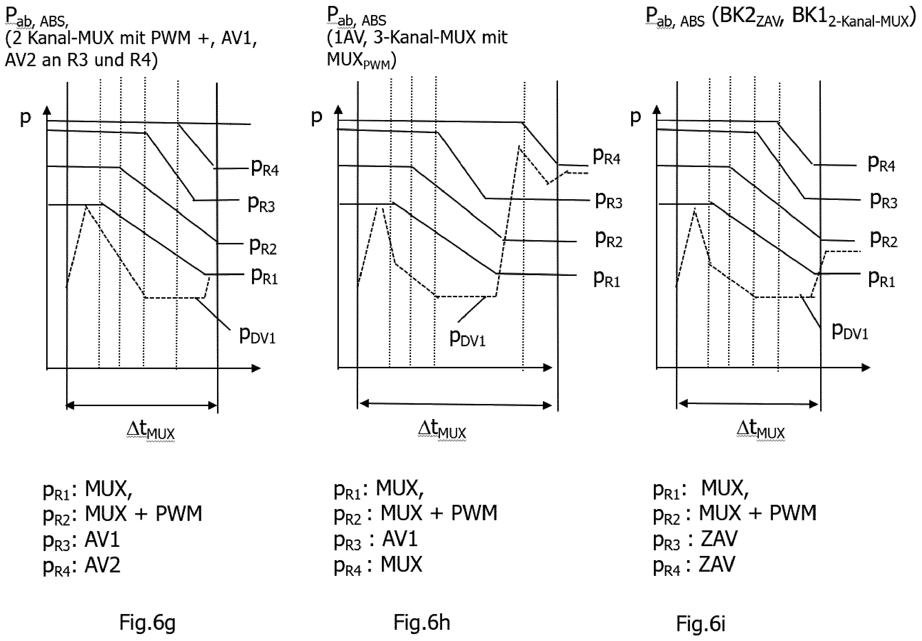

**Fig.6 b** zeigt den Ablauf des Druckaufbaues aller Räder p_{R1-R4} bis zum ersten Druck p1 und im weiteren Verlauf bis zum Maximaldruck p2, z.B. bei Fading, d.h. starker Temperaturerhöhung an den Radbremsen. Hier wird in einem ersten Schritt der Druck bis zu einem ersten Druckniveau p1 über die Druckversorgung DV1 erzeugt, der höhere Druck p₂ wird dann über die Druckversorgung DV2 erzeugt. In dieser Phase der weiteren Druckerhöhung von p1 bis zu p2 ist die Druckversorgung DV1 über das PD1-Ventil vom Bremskreis BK1 getrennt und der Druck in der Druckversorgung DV1 wird durch Rückfahren des Kolbens abgebaut. Der nicht dargestellte nachfolgende Druckabbau erfolgt dann über Auslassventile im oberen Druckbereich oder über die PPC-Steuerung der Druckversorgung DV1 im unteren Druckbereich.

**Fig.6c** zeigt den beispielhaften Druckaufbau bei Lenkungseingriffen bzw. Torque Vektoring an einer der Hinterachse HA an der Radbremsen R3. Ein derartiger Eingriff wird z.B. dann eingesetzt, wenn bei einer Kurvenfahrt an der Vorderachse ein Lenkeingriff durch die elektrische Servolenkung erfolgt und dieser Lenkungseingriff durch Erzeugung eines kontrollierten Bremsmomentes und eines Giermomentes an einem Hinterrad p_{R3} unterstützt wird. Durch diesen Eingriff kann die Wirkung eines Hinterachslenkungsaggregates (z.B. elektrische Hinterachslenkung) substituiert werden, weil die Drucksteuerung durch variable Drucksteuerung der DV1 (PPC-Regelung) sehr präzise erfolgt. Magnetventile zwischen Druckversorgung DV1 und Radbremse R3 werden hier zur Reduzierung des Strömungswiderstandes offen betrieben, der Bremsmomenteingriff wird ausschließlich über die DV1 gesteuert.

**Fig.6d** zeigt den Druckaufbau bei Bremsbetrieb mit unterschiedlicher Rekuperationsleistung an zwei Achsen, wobei ein bzw. mehrere Elektromotor(en) zur Rekuperation vom Bremsenergie an der Hinterachse und/oder Vorderachse vorgesehen ist. Durch das Bremsmoment über den Elektromotor ist an der Hinterachse ein niedriger Druck erforderlich, welcher durch unterschiedliche Achslastverteilung und max. Drehmomentleistung des Elektromotors bei Verzögerung zusätzlich variieren kann. Wie im Verfahren in Fig. 6c beschrieben, erfolgt die Steuerung des unterschiedlichen Druckverlaufes über PPC-Drucksteuerung, d.h. variable Vordrucksteuerung über eine Druckversorgung (DV1), wobei an einer Achse die Magnetventile der Radbremsen offen sind und an der Hinterachse die Magnetventile der Radbremsen PWM gesteuert betrieben werden.

**Fig.6e** zeigt den Druckabbau im Rekuperationsbetrieb an zwei Achsen. Vergleichbar wie in Fig. 6c und 6d erfolgt die Vordrucksteuerung über die Druckversorgung DV1. Unterschiedliche Druckverläufe werden realisiert, indem Magnetventile an einer Achse (VA) PWM gesteuert werden. Dies können Schaltventile an den Rädern sein oder Verbindungsventile BP1/BP2 des Bremskreises BK2 mit der Druckversorgung. In diesem Fall sind RB3 und RB4 in Gegensatz zur Darstellung in Fig.1 Radbremsen der Vorderachse. Wird die Hydraulikschaltung von Fig.1 verwendet, (Radbremse RB3 und RB4 an -HA, Radbremse RB1, RB2) an Hinterachse, ist ein zusätzliches Trennventil, wie wie in Fig. 1 dargestellt, damit der Raddruck der Vorderachse gleichzeitig zum Raddruck der Hinterachse abgebaut werden kann und der Druck an der Vorderachse höher ist als der Druck an der Hinterachse. Hierzu wird das TV-Ventil PWM gesteuert.

**Fig.6f** zeigt eine Alternative zur in Fig. 6d und Fig.6e erläuterten Druckabbauverfahren. Hier erfolgt die Druckregelung über den sequentiellen MUX-Betrieb. Hier wird der Vordruck der Druckversorgung DV1 derart gesteuert, dass zuerst der Druck an der Hinterachse abgebaut wird und nachfolgend an der Vorderachse. Der Druck wird daher nach Abschluss des Druckabbaus an der Hinterachse wieder erhöht, damit der Differenzdruck beim Öffnen nicht zu hoch ist. Dann wird der Druck an der Hinterachse wieder abgebaut. Hier ergibt sich ein Zeitverzug □t_{MUX} , der in der Realität jedoch sehr kurz ist und für den Fahrer kaum auflösbar ist. Der Vorteil in diesem Verfahren ist, dass nicht Ventile erforderlich sind, die PWM-gesteuert werden müssen und eine einheitliche Konfiguration der Hydraulik ist möglich. So können beispielweise auch Fahrzeuge mit diagonalen Bremskreisen beim Druckaufbau und Druckabbau bedient werden.

**Fig.6 g** zeigt eine erste Variante der Druckabbauregelung im ABS-Regelbetrieb mit 2-Kanal-MUX-Betrieb mit 2 Auslassventilen AV1 und AV2 an 2 Radbremsen. AV1 und AV2 sind dabei vorzugsweise an Radbremsen der Vorderachse, wo sich aufgrund der höheren Dynamikanforderung primär einen weiteren Freiheitsgrad im Druckabbau vorteilhaft auswirkt. In einem MUX-Regelzyklus werden durch Vordrucksteuerng der DV1 die Drücke in den Radbremsen p_{R1} und p_{R2} abgebaut, wobei das Schaltventil an der Radbremse R2 PWM-getaktet ist. Diese ermöglicht einen simultanen Druckabbau mit Druckgradientensteuerung. Gleichzeitig kann der Druck an den Radbremsen R3 und R4 über Auslassventile abgebaut werden. In diesem Fall ist AV1 anstatt an der Radbremse R1 (Fig. 1) an der Radbremse R4 angebracht.

**Fig.6 h** zeigt eine zweite Variante der Druckabbauregelung im ABS-Regelbetrieb mit 3-Kanal-MUX-Betireb mit einem Auslassventil AV1 an einer Radbremse. Hier wird der Druck analog zur Fig. 6g in den Radbremsen R1, R2 und R3 abgebaut, während Radbremse R4 erst später bedient wird über MUX-Regelung. Dadurch ergibt sich eine geringe Verzögerung der MUX-Zykluszeit □t_{MUX}.

**Fig.6 i** zeigt eine dritte Variante der Druckabbauregelung im ABS-Regelbetrieb mit 2-Kanal MUX-Betrieb im Bremskreis BK1 sowie einem Druckabbaubetrieb mit zentralen Auslassventile ZAV, z.B. im Bremskreis BK2. Hier wird während des MUX-Druckabbaus in den Radbremsen R1 und R2 der Druck in den Radbremsen R3 und R4 über das zentrale ZAV-Ventil abgebaut. Der Zeitpunkt des Druckabbaus in den Radbremsen R3 und R4 ist zeitlich flexibel, der Druckgradient kann über PWM-Betrieb gesteuert werden.

### Bezugszeichenliste

- 1 - 11: Hydraulikleitungen
- BK1: Bremskreis 1
- BK2: Bremskreis 2
- HZ: Hauptzylinder
- BP1: Bypassventil 1 (SO) bzw. Verbindungsschaltventil
- BP2: Bypassventil 2 (SO) bzw. Verbindungsschaltventil
- VB: Vorratsbehälter
- WS: Wegsimulator
- WA: Wegsimulatorabschaltventil
- ECU: elektrische Steuereinheit
- DV: Druckversorgung
- DG: Druckgeber
- D1 - D7: Dichtungen
- AV1, AV2: Auslassventile (SG)
- ZAV: zentrales Auslassventil (SG)
- SV: Schaltventil (SO)
- RZ: Radzylinder
- RB1-RB4: Radbremsen
- NV: Niveaugeber
- PD1: Schaltventil (SG)
- SO: stromlos offen
- SG: stromlos geschlossen
- SV: Saugventil
- RV: Rückschlagventil
- KWS: Kraft-Weg-Messelement
- Sp: Spindel mit KGT
- Ko: Kolben
- Dr: Drossel
- D: Dampferelement
- PS: Pedalwegsensoren
- P: Pedalbetätigung
- NS: Niveausensor
- TV: Trennventil
- V1 - V4: Ventile des DHK
- VL: Hydraulische Verbindungsleitung zur Verbindung der beiden Bremskreise BK1 und BK2
- VLa: innere Verbindungsleitung zur Verbindung der beiden Verbindungsschaltventile BP1 und BP2
- ÜV1, ÜV2: Überdruckventil

### Weitere Beispiele

Nachfolgend werden weitere Beispiele beschrieben:
Beispiel 1: Vorrichtung zur Bremskrafterzeugung in einem Fahrzeug mit einem Bremssystem mit mindestens zwei elektromotorisch angetriebenen Druckversorgungseinrichtungen (DV1, DV2), wobei
   - das Bremssystem einen ersten und einen zweiten hydraulische Bremskreis(BK1, BK2) mit jeweils mindestens einer oder zwei hydraulisch wirkenden Radbremsen (RB1, RB2, RB3, RB4) aufweist, und dass
   - mit den Druckversorgungseinrichtungen (DV1, DV2) Druck in mindestens einem Bremskreis (BK1, BK2) sowohl aufbaubar als auch abbaubar ist,
   - eine Druckversorgungseinrichtung (DV2) eine von einem elektromotorischen Antrieb angetriebene Pumpe, insbesondere einer Kolbenpumpe oder Zahnradpumpe, mit kontinuierlicher Volumenförderung ist,
   - mindestens einer Ventilanordnung (HCU) mit Ventilen zum radindividuellen Einstellen von Bremsdrücken und/oder zum Trennen bzw. Verbinden der Radbremsen (RB1, RB2, RB3, RB4) von einem Bremskreis und/oder einer Druckversorgungseinrichtung (DV1, DV2) vorgesehen ist,
   - zur Steuerung des Bremssystems oder Teilen davon mindestens eine elektronische Steuer- und Regeleinheit (ECU) vorgesehen ist
   - jeder Bremskreis (BK1, BK2) eine Hydraulikhauptleitung (4, 5) aufweist,
      über die die Radbremsen (RB1, RB2, RB3, RB4) mit jeder der beiden Druckversorgungseinrichtung (DV1, DV2) verbunden bzw. verbindbar sind,
   **dadurch gekennzeichnet,** dass das Bremssystem derart ausgebildet ist, dass mittels der ersten und/oder der zweiten Druckversorgungseinrichtung (DV1, DV2) in einem oder beiden Bremskreisen (BK1, BK2) sowohl unabhängig voneinander als auch gemeinsam eine Druckänderung, insbesondere ein Druckaufbau, vornehmbar ist, wobei die Druckversorgungseinrichtungen (DV1, DV2) simultan, insbesondere gleichzeitig, oder teilsimultan, insbesondere zeitversetzt oder zeitlich überlappend, Druckänderungen, insbesondere Druckaufbau, erzeugen.
Beispiel 2: Vorrichtung nach Beispiel 1, dadurch gekennzeichnet, dass entweder nur mit der ersten oder nur mit der zweiten Druckversorgungseinrichtung (DV1, DV2) in einem der beiden oder beiden Bremskreisen (BK1, BK2) eine Druckänderung, insbesondere ein Druckaufbau, erfolgt oder aber mit beiden Druckversorgungseinrichtungen (DV1, DV2) zeitgleich zusammen eine Druckänderung, insbesondere ein Druckaufbau, in einem oder beiden Bremskreisen (BK1, BK2) erfolgt.
Beispiel 3: Vorrichtung nach Beispiel 1 oder 2, dadurch gekennzeichnet, dass die Pumpe der ersten Druckversorgungseinrichtung entweder eine Kolben-Zylinder-Einheit oder eine Rotationspumpe, insbesondere eine Zahnradpumpe, insbesondere in Form einer Innenzahnradpumpe oder einer Zahnringpumpe, ist, wobei ein elektrischer Antrieb die Pumpe antreibt, und dass durch entsprechende Bestromung des Antriebs mittels der ersten Druckversorgungseinrichtung (DV1) Druck in mindestens einem Bremskreis (BK1, BK2) sowohl aufbaubar als auch abbaubar ist.
Beispiel 4: Vorrichtung nach Beispiel 3, dadurch gekennzeichnet, dasss die Pumpe eine einkreisige Pumpe ist, die über einen bürstenlosen Gleichstrommotor angesteuert ist und/oder über einen Umrichter im Vier-Quadratenbetrieb (positive/Negative Drehrichtung, positiver/Negativer Strom) betrieben wird.
Beispiel 5: Vorrichtung nach Beispiel 3 oder 4, dadurch gekennzeichnet, dass mittels der Zahnradpumpe in mindestens einer Drehrichtung Druck aufbaubar ist und durch Umkehr der Drehrichtung der Zahnradpumpe, insbesondere deren Antriebes, Druck über die Zahnradpumpe abbaubar ist.
Beispiel 6: Vorrichtung nach einem der vorhergehenden Beispiele, dadurch gekennzeichnet, dass die zweite Druckversorgungseinrichtung (DV2) eine Zahnradpumpe aufweist, mittels derer bei einer ersten Drehrichtung der Pumpe Druck aufbaubar und durch Umkehr der Drehrichtung der Zahnradpumpe, insbesondere deren Antriebs, Druck über die Zahnradpumpe in mindestens einem Bremskreis (BK1, BK2) abbaubar ist.
Beispiel 7: Vorrichtung nach einem der vorhergehenden Beispiele, dadurch gekennzeichnet, dass jeder Radbremse (RB1, RB2, RB3, RB4) jeweils ein eigenes, insbesondere stromlos offenes, Schaltventil (SV), zugeordnet ist, wobei durch Schließen eines Schaltventils (SV) der Druck in der zugehörigen Radbremse (RB1, RB2, RB3, RB4) gehalten werden kann.
Beispiel 8: Vorrichtung nach Beispiel 7, dadurch gekennzeichnet, dass das stromlose offene Schaltventil (SV) durch den in der Radbremse herrschenden Druck öffnet, sofern der in der Radbremse herrschende Druck, insbesondere um einen bestimmten Differenzdruck, höher ist als der Druck in der Zuführleitung zum Schaltventil (SV)
Beispiel 9: Vorrichtung nach einem der vorhergehenden Beispiele, dadurch gekennzeichnet, dass mittels jeder Druckversorgereinrichtung (DV1, DV2) unabhängig von der Funktionsfähigkeit der anderen Druckversorgereinrichtung (DV1, DV2) ein ABS- und/oder ESP-Betrieb mit mindestens achsindividueller oder bremskreisindividueller Regelung, insbesondere radindividueller Regelung, möglich ist.
Beispiel 10: Vorrichtung nach einem der vorhergehenden Beispiele, dadurch gekennzeichnet, dass beide Bremskreise (BK1, BK2) mittels einer Verbindungsleitung (VL) miteinander verbunden sind, wobei die Verbindungsleitung (VL) mit mindestens einem, insbesondere zwei stromlos offenen in Reihe geschalteten Schaltventilen (BP1, BP2) absperrbar ist.
Beispiel 11: Vorrichtung nach Beispiel 10, dadurch gekennzeichnet, dass mindestens ein zentrales Auslassventil (ZAV) zwischen den BD1 und BP2 angeordnet ist, welches über eine Hydraulikleitung mit dem Vorratsbehälter vorbunden ist, womit der Druck in einem oder beiden Bremskreise über mindestens ein geöffnetes Schaltventil (BP1, BP2) und/oder zentrales Auslassventil ZAV Druck in einem oder beiden Bremskreisen (BK1, BK2) aufbaubar ist.
Beispiel 12: Vorrichtung nach einem der vorhergehenden Beispiele, dadurch gekennzeichnet, dass entweder eine Betätigungseinheit (BE) mit einem Bremspedal (1), vorgesehen ist, wobei mittels der Betätigungseinheit (BE) hydraulisch in mindestens einem der Bremskreise (BK1, BK2) Druck aufbaubar ist, oder dass ein Elektro-Pedal mit Steuerung über eine, insbesondere zentrale, Steuereinheit (ECU, M-ECU) vorgesehen ist.
Beispiel 13: Vorrichtung nach Beispiele 12, dadurch gekennzeichnet, dass die Betätigungseinheit (BE) eine Kolben-Zylinder-Einheit mit einem in einem Zylinder verschieblich gelagerten Kolben aufweist, wobei zwischen Kolben und Zylinder mindestens drei den Kolben umgreifende Dichtungen parallel zueinander angeordnet sind, und dass mindestens zwei Verbindungsleitungen vorgesehen sind, die den Zylinderinnenraum der Kolben-Zylinder-Einheit mit dem Vorratsbehälter (VB) verbinden, wobei seitlich zu beiden Mündungen der beiden Verbindungsleitungen in den Zylinder jeweils eine Dichtung und zwischen den Mündungen beider Verbindungsleitungen in den Zylinder eine Dichtungen angeordnet ist, und dass in einer Verbindungsleitung eine Drossel und in der anderen Verbindungsleitung ein Rückschlagventil angeordnet ist, und hiermit der Ausfall einer Dichtung diagnostizierbar ist.
Beispiel 14: Vorrichtung nach Beispiel 12 oder 13, dadurch gekennzeichnet, dass die Betätigungseinheit (BE) über eine Verbindungsleitung (3) mit einem oder beiden Bremskreisen (BK1, BK2), insbesondere mit der Verbindungsleitung (VL) der beiden Bremskreise (BK1, BK2), verbunden bzw. verbindbar. ist, wobei mindestens ein schaltbares Ventil (FV) zur Absperrung der Verbindungsleitung (3) vorgesehen ist.
Beispiel 15: Vorrichtung nach einem der vorherigen Beispiele, dass die Radbremsen über stromlos offene Schaltventile mit den Druckversorungen verbunden sind, wobei die Schaltventile derart an die Radbremse angeschlossen sind sind, dass Sie sich durch den Druck in den Radbremsen selbstständig öffnen.
Beispiel 16: Vorrichtung nach einem der vorherigen Beispiele, dass Auslassventile (AV1, AV2, AVZ) an einer oder zwei Radbremsen oder einem Bremskreis vorgesehen sind, wobei die Auslassventile mit dem Vorratsbehälter verbunden sind und einen Druckabbau an den Radbremsen ermöglichen.
Beispiel 17: Vorrichtung nach einem der vorherigen Beispiele, dadurch gekennzeichnet, dass die Hydraulikleitungen, Magnetventile und Hydraulikelemente zur Druckerzeugeung der Druckversorgung in einer Baueinheit bzw. einem Hydraulikgehäuse (HCU) angeordnet sind, und dass die Betätigungseinheit (BE) in einem separaten Gehäuse angeordnet ist und hydraulisch mit dem Hydraulikgehäuse (HCU) verbunden ist, wobei insbesondere die Achse des Antriebs der ersten Druckversorgung (DV1) senkrecht oder parallel zur Achse des Antriebs der zweiten Druckversorung (DV2) angeordnet ist.
Beispiel 18: Vorrichtung nach einem der vorherigen Beispiele, dadurch gekennzeichnet, dass mindestens ein Auslassventil (AV1, AV2, ZAV) vorgesehen ist, über das in mindestens einer Radbremse (RB1, RB2, RB3, RB4) ein Druckabbau hin zum Vorratsbehälter (VB) möglich ist.
Beispiel 19: Verfahren unter Verwendung einer Vorrichtung nach einem der vorhergegangenen Beispiele, dass der Druckaufbau und Druckabbau entweder mittels einer elektrisch angetriebenen Kolben-Zylinder-Einheit im PPC-Verfahren über Stromsteuerung und/oder Kolbenwegsteuerung, insbesondere unter Berücksichtigung der Druck-Volumen-Kennlinie, erfolgt und/oder der Druckaufbau und Druckabbau mittels einer elektrisch angetriebenen Pumpe, insbesondere in Form einer Zahnradpuimpe, über Stromsteuerung und/oder Drehzahlsteuerung des Antriebes der Pumpe, insbesondere mit Nachsteuerung auf Basis der Leckage in der Zahnradpumpe, erfolgt.
Beispiel 20: Verfahren unter Verwendung einer Vorrichtung nach einem der vorhergegangen Beispiele, dass der Druckabbau und/oder Druckabbau im MUX-Betrieb und/oder PWM-Betrieb von stromlos offenen Ventilen erfolgt.
Beispiel 21: Verfahren unter Verwendung einer Vorrichtung nach einem der Beispiele 1 bis 18 oder nach Beispiel 19, dass mittels einer Zahnradpumpe und/oder einer motorisch angetriebenen Kolben-Zylinder-Einheit der Druckaufbau und/oder Druckabbau in mindestens zwei Radbremsen simulatan, zeitlich überlappend oder nacheinander erfolgt, wobei mittels eines geschlossenen Schaltventils (SV) der Druck in der zum Schaltventil (SV) gehörenden Radbremse gehalten wird.
Beispiel 22: Verfahren nach einem der Beispiele 19 bis 20, dadurch gekennzeichnet, dass beim Druckaufbau und/oder Druckabbau simultan oder teilsimultan unterschiedliche Druckverläufe für unterschiedliche Radbremsen oder Bremskreise mittels Puls-Weiten-Modulation bzw. PWM-Steuerung von stromlos offenen Ventilen (BP1, BP2, SV, ZAV) erzeugt werden.
Beispiel 23: Verfahren unter Verwendung einer Vorrichtung nach einem der Beispiele 1 bis 17 oder nach einem der Beispiele 19 bis 22, dadurch gekennzeichnet, dass bei Ausfall einer Druckversorgungseinrichtung (DV1, DV2) die jeweils andere Druckversorgung deren Funktion, insbesondere der Druckauf- und Druckabbau für die Bremskraftverstärkung, Rekuperationssteuerung, Torque Vektoring und Regelbetrieb ABS, ESP, mit übernimmt.
Beispiel 24: Verfahren unter Verwendung einer Vorrichtung nach einem der Beispiele 1 bis 18 oder nach einem der Beispiele 19 bis 23, dadurch gekennzeichnet, dass mittels Puls-Weiten-Modulation Schaltventile (SV, AV1, AV2, AVZ) angesteuert werden, um den Druck, insbesondere Druckabbau, in einer Radbremse einzustellen bzw. einzuregeln.
Beispiel 25: Verfahren unter Verwendung einer Vorrichtung nach einem der Beispiele 1 bis 17 oder nach einem der Beispiele 19 bis 24, dadurch gekennzeichnet, dass der Druckabbau aus den Bremskreisen und/oder Radbremsen über eine oder mehrere Druckversorgungen (DV1, DV2) und/oder über Auslassventile (AV1, AV2, ZAV), erfolgt, wobei der Druckabbau über die Auslassventile (AV1, AV2, AVZ) durch Zeitsteuerung der Öffnungszeit der Ventile modellbasiert oder mittels eines Druckgebers erfolgt.
Beispiel 26: Verfahren nach Beispiel 23 oder 24, dadurch gekennzeichnet, dass der Druckabbau in einer Radbremse oder einem Bremskreis über mindestens ein pulsweitenangesteuertes Schaltventil (AV1, AV2, AVZ) hin zum Vorratsbhälter (VB) erfolgt, wobei gleichzeitig, zeitlich überlappend oder nacheinander ein Druckabbau oder Druckaufbau in einer anderen Radbremse bzw. einem anderen Bremskreis mittels einer Zahnradpumpe und/oder mittels einer Kolben-Zylinder-Einheit erfolgt.
Beispiel 27: Verfahren unter Verwendung einer Vorrichtung nach einem der Beispiele 1 bis 18 oder nach einem der Beispiele 19 bis 25, dadurch gekennzeichnet, dass die Druckversorgungseinrichtung (DV1) in der Ausführungsform als Kolben-Zylinder-Einheit für den Nachförderbetrieb ausgestaltet ist und bei Erreichen der Volumengrenze im Vorhub vom ersten Bremskreis (BK1) über mindestens ein Ventil (PD1) getrennt wird und das mittels einer Rückbewegung des Kolben der ersten Druckversorgungseinrichtung (DV1) bei geschlossenen Ventil (PD1) über ein Rückschlagventil () Hydraulikmedium aus dem Vorratsbehälter (VB) in den Arbeitsraum (A1) der Kolben-Zylinder-Einheit der ersten Druckversorgungseinrichtung (DV1) angesaugt wird.
Beispiel 28: Verfahren nach einem der Beispiele 19 bis 26, dadurch gekennzeichnet, dass die hydraulische Betätigungseiheit (BE) und/oder die erste Druckversorgung (DV1) drei Dichtungen aufweist und mittels der Messung eines Leckflusses ein Ausfall einer der drei Dichtungen diagnostiziert wird.
Beispiel 29: Verfahren unter Verwendung einer Vorrichtung der Beispiele 1 bis 18 oder nach einem der vorhergehenden Verfahrensbeispiele, dadurch gekennzeichnet, dass der Druckabbau (Pab) über ein zentrales Auslassventil (ZAV), welches zur wahlweisen Absperrung der hydraulischen Verbindung zwischen der die beiden Bremskreistrennventile (BP1, BP2) miteinander verbindenden Hydraulikleitung (VL) mit dem Vorratsbehälter (VB) dient, über die Einstellung des Öffnungsquerschnitts mindestens eines Bremskreistrennventils (BP1, BP2), insbesondere mittels Stromregelung, gesteuert oder geregelt wird oder durch PWM-Taktung mindestens eines Bremskreistrennventils (BP1, BP2), erfolgt.
Beispiel 30: Verfahren unter Verwendung einer Vorrichtung der Beispiele 1 bis 18 oder nach einem der vorhergehenden Verfahrensbeispiele, dadurch gekennzeichnet, dass beim Druckabbau (Pab) über das Zentrale Auslassventil (ZAV) entweder nur ein Druckgeber (DG) in einem Bremskreis (BK1, BK2) oder jeweils ein Druckgeber beiden Bremskreisen (BK1, BK2) zur Messung des Ist-Druckes für die Druckabbauregelung, inbesondere genauer Druckabbauverlaufsregelung verwendet wird.
Beispiel 31: Verfahren unter Verwendung einer Vorrichtung der Beispiele 1 bis 18 oder nach einem der vorhergehenden Verfahrensbeispiele, dadurch gekennzeichnet, dass mittels eines Auslassventils (AV1, AV2, ZAV) ein Druckabbau (Pab) in nur einer Radbremse oder in beiden Radbremsen eines Bremskreises gleichzeitig erfolgt, wobei das jeder Radbremse zugeordnete Schaltventil (SV) während des Druckabbaus geöffnet ist und mindestens eines der Bremskreistrennventile (BP1, BP2) geschlossen ist, wobei insbesondere das MUX-Verfahren im Druckabbau unterschiedlicher Bremskreise durch sequentielle oder teilsimultane Öffnung der Ventile (BP1) oder (BP2) erfolgt.
Beispiel 32: Verfahren unter Verwendung einer Vorrichtung der Beispiele 1 bis 18 oder nach einem der vorhergehenden Verfahrensbeispiele, dadurch gekennzeichnet, dass bei der Notbremsfunktion (AEB) der Druckaufbau durch beide Druckversorgungseinrichtungen (DV1, DV2) erfolgt, wobei jede Druckversorgungseinrichtung (DV1, DV2) den Druck in je einem ihr zugeordneten Bremskreis (BK1, BK2) aufbaut, insbesondere unterschiedliche Drücke an den jeweiligen Achsen simultan aufgebaut werden und/oder eine Druckversorgungseinrichtung die Druckversorgung für beide Bremskreise übernimmt.
Beispiel 33: Verfahren unter Verwendung einer Vorrichtung der Beispiele 1 bis 18 oder nach einem der vorhergehenden Verfahrensbeispiele, dadurch gekennzeichnet, dass der Druckaufbau bis zu einem ersten Druck (p1), insbesondere Blockierdruck, mittels der ersten Druckversorgungseinrichtung (DV1) alleine oder mittels beider Druckversorgungseinrichtungen (DV1, DV2) gemeinsam erfolgt, und der Druckaufbau ab dem Druck (p1) bis zum Maximaldruck des hydraulischen Systems (p2) ausschließlich durch die zweite Druckversorgungseinrichtung (DV2) erfolgt.
Beispiel 34: Verfahren unter Verwendung einer Vorrichtung der Beispiele 1 bis 18 oder nach einem der vorhergehenden Verfahrensbeispiele, dadurch gekennzeichnet, dass mittels einer oder beiden Druckversorgungen (DV1, DV2) Torque-Vektoring durch radindividuelle Druckregelung eines Rades oder mehrerer Räder erfolgt, und dass auch bei Ausfall einer Druckversorgung die Torque-Vektoring-Funktion aufrecht erhalten wird
Beispiel 35: Verfahren nach Beispiel 34, dadurch gekennzeichnet, dass bei Ausfall der elektrischen Servolenkung die Vorrichtung eine Notlenkungsfunktion übernimmt.
Beispiel 36: Verfahren nach einem der vorhergehenden Verfahrensbeispiele, dadurch gekennzeichnet, dass mittels einer oder beiden Druckversorgungen (DV1, DV2) eine achsindivuelle Rekuperationsregelung durch achsindividuelle Druckregelung mehrer Achsen im Druckaufbau und Druckabbau (Pauf, pab) erfolgt, insbesondere bei Ausfall einer Druckversorgung die achsindivuelle Druckregelung über die Verbindungsleitung (VL) aufrecht erhalten wird.
Beispiel 37: Verfahren nach einem der vorhergehenden Verfahrensbeispiele, dadurch gekennzeichnet, dass mittels einer oder beiden Druckversorgungen radindivuelle ABS/ESP-Regelung durchgeführt wird (Pauf, pab) und auch bei Ausfall einer Druckversorgung die radivinduelle Druckregelung aufrecht über die Verbindungsleitung (VL) erhalten wird.
Beispiel 38: Verfahren unter Verwendung einer Vorrichtung der Beispiele 1 bis 18 oder nach einem der vorhergehenden Verfahrensbeispiele, dadurch gekennzeichnet, dass ein Bremsdruckeingriff nur an einem Rad über Vordrucksteuerung durch eine Kolben-Zylindereinheit oder eine Zahnradpumpe, insbesondere mittels PPC-Verfahren für die Kolben-Zylinder-Einheit und/oder Strom-Drehzahlregelgung des Pumpenmotors der zahnradpumpe, erfolgt.
Beispiel 39: Verfahren unter Verwendung einer Vorrichtung der Beispiele 1 bis 18 oder nach einem der vorhergehenden Verfahrensbeispiele, dadurch gekennzeichnet, dass ein Bremsdruckeingriff an mehreren Rädern nacheinander im Multiplex-Verfahren (MUX-Verfahren) erfolgt.
Beispiel 40: Verfahren unter Verwendung einer Vorrichtung der Beispiele 1 bis 18 oder nach einem der vorhergehenden Verfahrensbeispiele, dadurch gekennzeichnet, dass ein Bremsdruckeingriff an mehreren Rädern gleichzeitig durch PWM-Steuerung von Schaltventilen (SV, BP1, BP2, AV1, AV2, AVZ) erfolgt.
Beispiel 41: Verfahren unter Verwendung einer Vorrichtung der Beispiele 1 bis 18 oder nach einem der vorhergehenden Verfahrensbeispiele, dadurch gekennzeichnet, dass ein Bremsdruckeingriff an mehreren Rädern gleichzeitig durch Nutzung des simultanen Betriebes der Druckversorgungen erfolgt.
Beispiel 42: Verfahren unter Verwendung einer Vorrichtung der Beispiele 1 bis 18 oder nach einem der vorhergehenden Verfahrensbeispiele, dadurch gekennzeichnet, dass der, insbesondere effektive, Öffnungsquerschnitt mindestens eines Magnetventils (SV) mittels PWM-Taktung zur Einstellung des in der Radbremse bzw. den Radbremsen einer Achse des Fahrzeugs geforderten Drucks eingestellt oder eingeregelt wird.
Beispiel 43: Verfahren unter Verwendung einer Vorrichtung der Beispiele 1 bis 18 oder nach einem der vorhergehenden Verfahrensbeispiele, dadurch gekennzeichnet, dass ein erstes Magnetventil (SV) während der Druckregelphase (ΔT) dauerhaft geöffnet ist während der, insbesondere effektive, Öffnungsquerschnitt eines zweiten Magnetventils (SV) stromgeregelt oder PWM-getaktet eingestellt bzw. eingeregelt wird.
Beispiel 44: Verfahren unter Verwendung einer Vorrichtung der Beispiele 1 bis 18 oder nach einem der vorhergehenden Verfahrensbeispiele, dadurch gekennzeichnet, dass beim Druckaufbau oder Druckabbau mittels der ersten Druckversorgungseinrichtung (DV1) unterschiedliche Druckverläufe an mindestens einer Achse des Fahrzeugs im Mulitplexbetrieb an mindestens einer Radbremse eingestellt bzw. eingeregelt werden, wobei der Druck sequentiell durch Kolbenwegsteuerung des Kolbens der Kolben-Zylinder-Einheit eingestellt und/oder mittels Strom- und Drehzahlsteuerung des Pumpenmotors geregelt wird.
Beispiel 45: Verfahren unter Verwendung einer Vorrichtung der Beispiele 1 bis 18 oder nach einem der vorhergehenden Verfahrensbeispiele, dadurch gekennzeichnet, dass die Druckänderung (Pab, Pauf) in mindestens einer Radbremse (RB), insbesondere eines Bremskreises (BK1, BK2) oder einer Fahrzeugachse, bei für die Druckänderungsphase (ΔT) dauerhaft geöffnetem zugehörigem Schaltventil (SV) mittels Kolbenverstellung oder Verdrehen der Zahnradpumpe der ersten Druckregeleinrichtung (DV1) erfolgt, und dass zeitgleich die Druckänderung in der weiteren Radbremse (RB), insbesondere des gleichen Bremskreises bzw. der gleichen Fahrzeugachse, mittels der ersten Druckversorgungseinrichtung (DV1) und mittels Pulsweitenmodulation angesteuertem zugehörigem Schaltventil (SV) erfolgt.
Beispiel 46: Verfahren nach einem der Beispiele 43 bis 45, dadurch gekennzeichnet, dass die Druckänderung, insbesondere der Druckabbau, in mindestens einer weiteren Radbremse (RB) über ein der Radbremse (RB) oder dem Bremskreis (BK1, BK2) zugeordnetes Auslassventil (AV1, AV2, ZAV) erfolgt.

## Patentansprüche

1. Vorrichtung zur Bremskrafterzeugung in einem Fahrzeug mit einem Bremssystem mit mindestens einer ersten und einer zweiten elektromotorisch angetriebenen Druckversorgungseinrichtung (DV1, DV2),
- das Bremssystem zumindest zwei hydraulisch wirkende Radbremsen (RB1, RB2, RB3, RB4) aufweist; und
- Druck in mindestens einer Radbremse (RB1, RB2, RB3, RB4) sowohl aufbaubar als auch abbaubar ist mittels der ersten Druckversorgungseinrichtung (DV1) und/oder mittels zumindest eines Auslassventils (ZAV, AV1, AV2), das die jeweilige Radbremse (RB1, RB2, RB3, RB4) mit einem Vorratsbehälter (VB) verbindet; wobei
- die zweite Druckversorgungseinrichtung (DV2) eine von einem elektromotorischen Antrieb angetriebene Pumpe mit kontinuierlicher Volumenförderung ist; und
- die erste und die zweite Druckversorgungseinrichtung (DV1, DV2) in eine Baueinheit integriert und dazu eingerichtet sind, in einem Motorraum oder Aggregateraum des Fahrzeugs von der Spritzwand des Fahrzeugs entfernt angeordnet zu werden; wobei
- mindestens einer Ventilanordnung (HCU) mit Ventilen zum radindividuellen Einstellen von Bremsdrücken und/oder zum Trennen bzw. Verbinden der Radbremsen (RB1, RB2, RB3, RB4) von bzw. mit einem Bremskreis und/oder einer Druckversorgungseinrichtung (DV1, DV2) vorgesehen ist; und wobei
- mindestens eine elektronische Steuer- und Regeleinheit (ECU) zur Steuerung des Bremssystems oder Teilen davon vorgesehen ist, insbesondere zur Steuerung einer Bremsfunktion zum automatisierten Fahren, wie etwa eine Notbremsfunktion (AEB), ABS und/oder ESP; wobei
- die Radbremsen (RB1, RB2, RB3, RB4) über Hydraulikleitungen (4, 5) und zudem Schaltventile (SV) mit jeder der ersten und zweiten Druckversorgungseinrichtung (DV1, DV2) verbunden oder verbindbar sind, wobei jede Radbremse (RB1, RB2, RB3, RB4) ein stromlos offenes Schaltventil (SV) aufweist, wobei durch Schließen eines Schaltventils (SV) während des Druckaufbaus die zugehörige Radbremse (RB1, RB2, RB3, RB4) von zumindest einer Druckversorgungseinrichtung (DV1, DV2) getrennt werden kann, insbesondere für eine individuelle Druckmodulation für einen Bremskreis oder einen Radkreis;
**dadurch gekennzeichnet, dass**
das Bremssystem ferner umfasst:
- **entweder** ein Elektro-Pedal (P) mit einer Sensor-ECU und eine Steuerung über eine zentrale ECU (M-ECU), wobei ein Fahrerwunsch von der Sensor-ECU an zumindest eines der ersten und zweiten Druckversorgungseinrichtung (DV1, DV2) übertragen wird;
- **oder** einen Hauptbremszylinder (HZ), der mittels einer Betätigungseinheit (BE) in Form eines Pedals betätigbar ist und der nur einen Kolben aufweist, wobei ein Druckraum des Hauptbremszylinders (HZ) mit einem Wegsimulator (WS) verbunden ist und wobei der Druckraum über eine hydraulische Leitung mit zumindest einem des ersten und zweiten hydraulischen Bremskreises (BK1, BK2) verbindbar ist, wobei zumindest ein steuerbares Ventil einer Ventilvorrichtung zum Schließen der hydraulischen Leitung in der hydraulischen Leitung angeordnet ist;
- **oder** wobei das Bremssystem bei einer Bremsfunktion zum automatisierten Fahren, wie etwa eine Notbremsfunktion (AEB), ABS und/oder ESP, allein über eine zentrale ECU (M-ECU) und ohne Erfassung eines Fahrerwunsches am Elektro-Bremspedal oder einem Hauptzylinder gesteuert wird.

2. Vorrichtung gemäß einem der vorhergehenden Ansprüche, **dadurch gekennzeichnet, dass** eine Druckänderung, insbesondere ein Druckaufbau, in einem oder beiden Bremskreisen (BK1, BK2) entweder mittels nur der ersten Druckversorgungseinrichtung (DV1) oder mittels nur der zweiten Druckversorgungseinrichtung (DV2) vornehmbar ist, oder dass eine Druckänderung, insbesondere ein Druckaufbau, in einem oder beiden Bremskreisen (BK1, BK2) mittels der ersten und der zweiten Druckversorgungseinrichtung (DV1, DV2) gleichzeitig vornehmbar ist.

3. Vorrichtung gemäß einem der vorhergehenden Ansprüche, **dadurch gekennzeichnet, dass** die Pumpe der ersten Druckversorgungseinrichtung (DV1) entweder eine Kolben-Zylinder-Einheit oder eine Rotationspumpe ist, insbesondere eine Zahnradpumpe, insbesondere in Form einer Innenzahnradpumpe oder einer Zahnringpumpe, wobei ein elektrischer Antrieb die Pumpe antreibt, und dass durch entsprechende Bestromung des Antriebs mittels der ersten Druckversorgungseinrichtung (DV1) Druck in mindestens einem Bremskreis (BK1, BK2) sowohl aufbaubar als auch abbaubar ist.

4. Vorrichtung nach einem der vorhergehenden Ansprüche, **dadurch gekennzeichnet, dass** jeder Radbremse (RB1, RB2, RB3, RB4) jeweils ein eigenes, insbesondere stromlos offenes, Schaltventil (SV), zugeordnet ist, wobei durch Schließen eines Schaltventils (SV) der Druck in der zugehörigen Radbremse (RB1, RB2, RB3, RB4) gehalten werden kann; wobei insbesondere das stromlose offene Schaltventil (SV) durch den in der Radbremse herrschenden Druck öffnet, sofern der in der Radbremse herrschende Druck, insbesondere um einen bestimmten Differenzdruck, höher ist als der Druck in der Zuführleitung zum Schaltventil (SV).

5. Vorrichtung nach einem der vorhergehenden Ansprüche, **dadurch gekennzeichnet, dass** mittels jeder Druckversorgereinrichtung (DV1, DV2) unabhängig von der Funktionsfähigkeit der jeweils anderen Druckversorgereinrichtung (DV1, DV2) ein ABS- und/oder ESP-Betrieb mit mindestens achsindividueller oder bremskreisindividueller Regelung, insbesondere radindividueller Regelung, möglich ist.

6. Vorrichtung nach einem der vorhergehenden Ansprüche, **dadurch gekennzeichnet, dass** der erste und der zweite Bremskreis (BK1, BK2) mittels einer ersten Verbindungsleitung (VL) miteinander verbunden sind, wobei die erste Verbindungsleitung (VL) mit mindestens einem stromlos offenen Schaltventil, insbesondere mit zwei stromlos offenen in Reihe geschalteten Schaltventilen (BP1, BP2), absperrbar ist.

7. Vorrichtung nach Anspruch 6, **dadurch gekennzeichnet, dass** zwischen dem ersten (BP1) und dem zweiten Schaltventil (BP2) mindestens ein zentrales Auslassventil (ZAV) angeordnet ist, das über eine Hydraulikleitung mit dem Vorratsbehälter verbunden ist, wobei der Druck in einem oder beiden Bremskreise (BK1, BK2) über mindestens ein geöffnetes Schaltventil (BP1, BP2) und/oder das zentrale Auslassventil (ZAV) aufbaubar ist.

8. Vorrichtung nach einem der vorhergehenden Ansprüche, **dadurch gekennzeichnet, dass** entweder eine Betätigungseinheit (BE) mit einem Bremspedal (1) vorgesehen ist, wobei mittels der Betätigungseinheit (BE) hydraulisch in mindestens einem der Bremskreise (BK1, BK2) Druck aufbaubar ist, oder dass ein Elektro-Pedal mit Steuerung über eine, insbesondere zentrale, Steuereinheit (ECU, M-ECU) vorgesehen ist.

9. Vorrichtung nach Anspruch 8, **dadurch gekennzeichnet, dass** die Betätigungseinheit (BE) eine Kolben-Zylinder-Einheit mit einem in einem Zylinder verschieblich gelagerten Kolben aufweist, wobei zwischen Kolben und Zylinder mindestens drei den Kolben umgreifende Dichtungen parallel zueinander angeordnet sind, und dass mindestens zwei Verbindungsleitungen vorgesehen sind, die den Zylinderinnenraum der Kolben-Zylinder-Einheit mit dem Vorratsbehälter (VB) verbinden, wobei seitlich zu beiden Mündungen der beiden Verbindungsleitungen in den Zylinder jeweils eine Dichtung und zwischen den Mündungen beider Verbindungsleitungen in den Zylinder eine Dichtungen angeordnet ist, und dass in einer Verbindungsleitung eine Drossel und in der anderen Verbindungsleitung ein Rückschlagventil angeordnet ist, und hiermit der Ausfall einer Dichtung diagnostizierbar ist.

10. Vorrichtung nach Anspruch 8 oder 9, **dadurch gekennzeichnet, dass** die Betätigungseinheit (BE) über eine Verbindungsleitung (3) mit einem oder beiden Bremskreisen (BK1, BK2), insbesondere mit der Verbindungsleitung (VL) der beiden Bremskreise (BK1, BK2), verbunden bzw. verbindbar. ist, wobei mindestens ein schaltbares Ventil (FV) zur Absperrung der Verbindungsleitung (3) vorgesehen ist.

11. Vorrichtung nach einem der vorhergehenden Ansprüche, **dadurch gekennzeichnet, dass** die Radbremsen über stromlos offene Schaltventile mit den Druckversorgungseinrichtungen verbunden sind, wobei die Schaltventile derart an die Radbremse angeschlossen sind, dass sie sich durch den Druck in den Radbremsen selbstständig öffnen.

12. Verfahren unter Verwendung einer Vorrichtung nach einem der vorhergehenden Vorrichtungsansprüche oder nach einem der vorhergehenden Verfahrensansprüche, **dadurch gekennzeichnet, dass** der Druckabbau und/oder Druckabbau im MUX-Betrieb und/oder PWM-Betrieb von stromlos offenen Ventilen erfolgt.

13. Verfahren unter Verwendung einer Vorrichtung nach einem der vorhergehenden Vorrichtungsansprüche oder nach einem der vorhergehenden Verfahrensansprüche, **dadurch gekennzeichnet, dass** mittels einer Zahnradpumpe und/oder einer motorisch angetriebenen Kolben-Zylinder-Einheit der Druckaufbau und/oder Druckabbau in mindestens zwei Radbremsen simultan, zeitlich überlappend oder nacheinander erfolgt, wobei mittels eines geschlossenen Schaltventils (SV) der Druck in der zum Schaltventil (SV) gehörenden Radbremse gehalten wird.

14. Verfahren unter Verwendung einer Vorrichtung nach einem der vorhergehenden Vorrichtungsansprüche oder nach einem der vorhergehenden Verfahrensansprüche, **dadurch gekennzeichnet, dass** beim Druckaufbau und/oder Druckabbau simultan oder teilsimultan unterschiedliche Druckverläufe für unterschiedliche Radbremsen oder Bremskreise mittels Puls-Weiten-Modulation bzw. PWM-Steuerung von stromlos offenen Ventilen (BP1, BP2, SV, ZAV) erzeugt werden.

15. Verfahren unter Verwendung einer Vorrichtung nach einem der vorhergehenden Vorrichtungsansprüche oder nach einem der vorhergehenden Verfahrensansprüche, **dadurch gekennzeichnet, dass** bei Ausfall einer Druckversorgungseinrichtung (DV1, DV2) die jeweils andere Druckversorgung deren Funktion, insbesondere den Druckauf- und Druckabbau für die Bremskraftverstärkung, Rekuperationssteuerung, Torque Vektoring und Regelbetrieb ABS, ESP, mit übernimmt.

16. Verfahren unter Verwendung einer Vorrichtung nach einem der vorhergehenden Vorrichtungsansprüche oder nach einem der vorhergehenden Verfahrensansprüche, **dadurch gekennzeichnet, dass** der Druckabbau aus den Bremskreisen und/oder Radbremsen über eine oder mehrere Druckversorgungen (DV1, DV2) und/oder über Auslassventile (AV1, AV2, ZAV), erfolgt, wobei der Druckabbau simultan oder teilsimultan in mehreren Radbremsen (RB1, RB2, RB3, RB4) erfolgt.

17. Verfahren unter Verwendung einer Vorrichtung nach einem der vorhergehenden Vorrichtungsansprüche oder nach einem der vorhergehenden Verfahrensansprüche, **dadurch gekennzeichnet, dass** der Druckabbau in einer Radbremse oder einem Bremskreis über mindestens ein Auslassventil (AV1, AV2, AVZ) hin zum Vorratsbehälter (VB) erfolgt, wobei gleichzeitig, zeitlich überlappend oder nacheinander ein Druckabbau oder Druckaufbau in einer anderen Radbremse bzw. einem anderen Bremskreis mittels einer Zahnradpumpe und/oder mittels einer Kolben-Zylinder-Einheit über ein Schaltventil (SV) erfolgt.

18. Verfahren unter Verwendung einer Vorrichtung nach einem der vorhergehenden Vorrichtungsansprüche oder nach einem der vorhergehenden Verfahrensansprüche, **dadurch gekennzeichnet, dass** die erste Druckversorgungseinrichtung (DV1) in der Ausführungsform als Kolben-Zylinder-Einheit für den Nachförderbetrieb ausgestaltet ist und bei Erreichen der Volumengrenze im Vorhub vom ersten Bremskreis (BK1) über mindestens ein Ventil (PD1) getrennt wird und das mittels einer Rückbewegung des Kolben der ersten Druckversorgungseinrichtung (DV1) bei geschlossenen Ventil (PD1) über ein Rückschlagventil Hydraulikmedium aus dem Vorratsbehälter (VB) in den Arbeitsraum (A1) der Kolben-Zylinder-Einheit der ersten Druckversorgungseinrichtung (DV1) angesaugt wird.

19. Verfahren unter Verwendung einer Vorrichtung nach einem der vorhergehenden Vorrichtungsansprüche oder nach einem der vorhergehenden Verfahrensansprüche, **dadurch gekennzeichnet, dass** bei der Notbremsfunktion (AEB) der Druckaufbau durch beide Druckversorgungseinrichtungen (DV1, DV2) erfolgt, wobei jede Druckversorgungseinrichtung (DV1, DV2) den Druck in je einem ihr zugeordneten Bremskreis (BK1, BK2) aufbaut, insbesondere unterschiedliche Drücke an den jeweiligen Achsen simultan aufgebaut werden und/oder eine Druckversorgungseinrichtung die Druckversorgung für beide Bremskreise übernimmt.

20. Verfahren unter Verwendung einer Vorrichtung nach einem der vorhergehenden Vorrichtungsansprüche oder nach einem der vorhergehenden Verfahrensansprüche, **dadurch gekennzeichnet, dass** der Druckaufbau bis zu einem ersten Druck (p1), insbesondere Blockierdruck, mittels der ersten Druckversorgungseinrichtung (DV1) alleine oder mittels beider Druckversorgungseinrichtungen (DV1, DV2) gemeinsam erfolgt, und der Druckaufbau ab dem Druck (p1) bis zum Maximaldruck des hydraulischen Systems (p2) ausschließlich durch die zweite Druckversorgungseinrichtung (DV2) erfolgt.

21. Verfahren unter Verwendung einer Vorrichtung nach einem der vorhergehenden Vorrichtungsansprüche oder nach einem der vorhergehenden Verfahrensansprüche, **dadurch gekennzeichnet, dass** mittels einer oder beiden Druckversorgungen (DV1, DV2) Torque-Vektoring durch radindividuelle Druckregelung eines Rades oder mehrerer Räder erfolgt, und dass auch bei Ausfall einer Druckversorgung die Torque-Vektoring-Funktion aufrechterhalten wird; wobei insbesondere bei Ausfall der elektrischen Servolenkung die Vorrichtung eine Notlenkungsfunktion übernimmt.

22. Verfahren unter Verwendung einer Vorrichtung nach einem der vorhergehenden Vorrichtungsansprüche oder nach einem der vorhergehenden Verfahrensansprüche, **dadurch gekennzeichnet, dass** mittels einer oder beiden Druckversorgungen (DV1, DV2) eine achsindivuelle Rekuperationsregelung durch achsindividuelle Druckregelung mehrerer Achsen im Druckaufbau und Druckabbau (Pauf, Pab) erfolgt, insbesondere bei Ausfall einer Druckversorgung die achsindivuelle Druckregelung über die Verbindungsleitung (VL) aufrechterhalten wird.

23. Verfahren unter Verwendung einer Vorrichtung nach einem der vorhergehenden Vorrichtungsansprüche oder nach einem der vorhergehenden Verfahrensansprüche, **dadurch gekennzeichnet, dass** mittels einer oder beiden Druckversorgungen radindividuelle ABS/ESP-Regelung durchgeführt wird (Pauf, Pab) und auch bei Ausfall einer Druckversorgung die radindividuelle Druckregelung über die Verbindungsleitung (VL) aufrechterhalten wird.
